# EUROPÄISCHE PATENTSCHRIFT

(11) **EP 2 529 511 B1**
(45) Veröffentlichungstag und Bekanntmachung des Hinweises auf die Patenterteilung: **07.10.2015**
(21) Anmeldenummer: 10773609.2
(22) Anmeldetag: 22.10.2010
(51) Int. Cl.: H04L 12/28

(54) **VERFAHREN UND VORRICHTUNG ZUR STEUERUNG EINES HEIMAUTOMATISIERUNGSSYSTEMS**
METHOD AND DEVICE FOR CONTROLLING A HOME AUTOMATION SYSTEM
PROCÉDÉ ET DISPOSITIF DESTINÉS À COMMANDER UN SYSTÈME D'AUTOMATISATION DOMESTIQUE

(30) Priorität: 25.01.2010 DE 102010005756
(43) Veröffentlichungstag der Anmeldung: 05.12.2012
(73) Patentinhaber: RWE Effizienz GmbH, 44139 Dortmund (DE); EQ-3 AG, 26789 Leer (DE)
(72) Erfinder: DANKE, Enno, 81373 München (DE); GROHMANN, Bernd, 26135 Oldenburg (DE); LUX, Daniel, DK-9520 Skorping (DK)
(74) Vertreter: Cohausz & Florack
(86) Internationale Anmeldenummer: PCT/EP2010/065918
(87) Internationale Veröffentlichungsnummer: WO 2011/088909

(56) Entgegenhaltungen:
- EP-A1- 1 387 521
- US-A1- 2005 120 246
- US-A1- 2005 210 295
- US-A1- 2007 168 665

## Beschreibung

Der Gegenstand betrifft ein Verfahren zum Betreiben eines zentralen Steuergerätes für ein Heimautomatisierungssystem. Darüber hinaus betrifft der Gegenstand ein Verfahren zum Einbinden eines Gerätes in ein Heimautomatisierungssystem. Der Gegenstand betrifft auch ein zentrales Steuergerät für ein Heimautomatisierungssystem sowie ein Gerät für ein Heimautomatisierungssystem.

Systeme zur Heimautomatisierung sind hinlänglich bekannt. So ist zum Beispiel unter der Bezeichnung EIB/KNX ein kabelgebundenes Heimautomatisierungssystem bekannt, bei dem über einen seriellen Bus Nachrichten zwischen Sensoren und Aktoren ausgetauscht werden und entsprechend vorgebbarer Regeln (Parameter) elektrische Verbraucher gesteuert werden. Ein solches Bussystem erfordert jedoch eine aufwendige Verkabelung, die fast ausschließlich im Neubau realisierbar ist.

Darüber hinaus ist auch ein funkbetriebenes Heimautomatisierungssystem aus der US 2005/0120246 A1 bekannt, dessen Steuerungseinheit mehr als ein Gerät steuern kann und in der Lage ist mit diesen über die in den Geräten vorhandenen öffentlichen Schlüssel verschlüsselt zu kommunizieren.

Bei der Nachrüstung von Heimautomatisierungslösungen in bestehende Elektroinstallationen eignen sich insbesondere solche funkbetriebenen Lösungen. Hierbei kommunizieren Sensoren und Aktoren sowie zentrale Steuerrechner über Hochfrequenzfunk. Da bei der Nachrüstung jedoch an vielen Stellen, an denen Sensoren oder Aktoren eingesetzt werden, keine Stromversorgung vorhanden ist, sind zumindest energetisch eigengespeiste Sensoren (z.B. mittels Batterien, Kondensatoren, etc.) notwendig. Bei den eigengespeisten Sensoren ist der Stromverbrauch jedoch ein entscheidendes Kriterium für die Dauer des Betriebs des Sensors mit einer einzigen Batterie. Sensoren die ununterbrochen mit Aktoren und zentralen Steuerrechnern kommunizieren oder in regelmäßigen Abständen mit den Aktoren bzw. den zentralen Steuerrechnern kommunizieren, verbrauchen unnötig viel Strom. Daher ist bereits bekannt, die Batterielebensdauer dadurch zu verlängern, dass die Geräte in einen Schlafmodus versetzt werden und nur bei einer Nutzerinteraktion am Gerät in einen Aktivmodus versetzt werden und Nachrichten aussenden und empfangen.

Die Kommunikation zwischen den Geräten untereinander als auch zwischen den Geräten und dem zentralen Steuerrechner muss bevorzugt verschlüsselt erfolgen. Dies insbesondere vor dem Hintergrund, dass ansonsten durch Fremdzugriffe die Steuerung eines Heimautomatisierungssystems beeinflusst werden könnte. So wäre es beispielsweise möglich, dass Alarmfunktionen von außen beeinflusst werden. Auch wäre es möglich, elektrische Funktionen außerhalb eines Gebäudes mittels geeigneter Software und Hardware zu beeinflussen, ohne dass dies vom Benutzer gewünscht ist. Aus diesem Grunde ist eine sichere Kommunikation eine nahezu zwingende Vorraussetzung für ein sicheres und funktionstüchtiges Heimautomatisierungssystem.

Eine sichere Kommunikation ist jedoch nur dann möglich, wenn ein Netzwerkschlüssel, mit dem Nachrichten verschlüsselt werden, allen Kommunikationsteilnehmern bekannt ist und gegebenenfalls nur für ein spezielles Heimautomatisierungssystem gültig ist. Daher ist es notwendig, dass beim Einbinden eines Gerätes in ein Netzwerk dieses Gerät den Netzwerkschlüssel erhält.

Auch kann es aufgrund von Funkübertragung dazu kommen, dass mehrere Funknetze in Reichweite eines neuen Gerätes sind. Somit könnten sich die Funknetze, wenn kein Netzwerkschlüssel das jeweilige Funknetz absichert, einander beeinflussen.

Zusätzlich schlafen einige Geräte üblicherweise und wachen nur zyklisch, synchronisiert, bei Benutzeraktionen oder per Wake-up Burst auf, um Energie zu sparen. Im Gegensatz zu den etablierten Mechanismen, wie z.B. bei WLAN, haben die Geräte üblicherweise keine Nutzerschnittstelle, mit der das gewünschte Netzwerk auswählbar ist oder ein Schlüssel eingebbar ist.

Aus diesem Grunde lag dem Gegenstand die Aufgabe zugrunde, ein Heimautomatisierungssystem zur Verfügung zu stellen, bei welchem ein Schlüsselaustausch zuverlässig und benutzerfreundlich erfolgt. Insbesondere soll ein Schlüsselaustausch ohne Benutzereingabe, insbesondere ohne Benutzereingabe am Gerät, möglich sein. Weiterhin soll der Schlüsselaustausch mit Geräten möglich sein, die üblicherweise schlafen und die aus Energieverbrauchsgründen nicht bis zum Schlüsselaustausch ständig wach sein können.

Diese Aufgabe wird gemäß einem Aspekt durch ein Verfahren nach Anspruch 1 gelöst.

Es ist erkannt worden, dass die notwendige Sicherheit für die Verteilung eines Netzwerkschlüssels dann gewährleistet sein kann, wenn ein neues Gerät in einer Geräte-Einbindungs-Anfrage bereits einen temporären Schlüssel versendet, welcher von dem zentralen Steuergerät dafür verwendet wird, den Netzwerkschlüssel zu verschlüsseln und zu verteilen. Da der Netzwerkschlüssel die Entschlüsselung des gesamten Netzwerksverkehrs ermöglicht, soll verhindert werden, dass unautorisierte Geräte diesen Schlüssel erhalten. Daher kann, bevor der Netzwerkschlüssel zum Gerät übertragen wird, z.B. vom Benutzer eine Autorisierung angefragt werden.

Auch ist es möglich, zumindest die Geräte-Identifikation auf einer Anzeige nach dem Empfangen anzuzeigen. Mittels der in Schritt b) ermittelten Geräte-Identifikation und ggf. des Anzeigens in Schritt c) der Geräte-Identifikation ist es für den Benutzer möglich, ein Gerät zu autorisieren. Dies kann beispielsweise über eine grafische Benutzeroberfläche eines Bediengerätes erfolgen. Die Oberfläche kann z.B. eine HTML Seite sein. Auch können Applikationen auf einem PC oder Mobilgerät ausgeführt werden, die das Autorisieren ermöglichen. Eine Applikation kann z.B. eine Silverlight Applikation auf einem PC oder Mobilgerät (Smart Phone, Tablet PC, etc.) sein. Auch kann die Autorisierung ohne Nutzerinteraktion erfolgen. Dann ist es nicht notwendig, die Identifikation anzuzeigen. Auch kann eine Anzeige so erfolgen, dass lediglich angezeigt wird, dass ein Gerät eingebunden werden möchte, ohne die Geräte-Identifikation anzuzeigen. Ein Nutzer weiß in der Regel, wenn er neue Geräte angeschlossen hat und kann daher die Einbindung dieser neuen Geräte autorisieren, ohne zwingend die Geräte-Identifikation zu kennen.

Beispielsweise ist es möglich, dass die Geräte-Identifikation eine Seriennummer ist. Anhand dieser Informationen, und anhand zusätzlicher, beispielsweise über das Internet erhaltener Informationen zu dem Gerät, die anhand der Geräte-Identifikation ermittelt werden können, kann der Benutzer eine aktive Autorisierung durchführen.

Nachdem das neue Gerät im Steuergerät autorisiert wurde, sendet das Steuergerät einen Netzwerkschlüssel in Schritt d) im Rahmen einer KEY_OFFER Nachricht aus. Mit diesem Netzwerkschlüssel ist die Verschlüsselung des Netzwerkverkehrs möglich. Der Netzwerkschlüssel wird jedoch beim Aussenden mit dem temporären Schlüssel verschlüsselt.

Mit dem beschriebenen Verfahren können sich neue Geräte beim zentralen Steuergerät mittels einer Geräte-Einbindungs-Anfrage (INCLUSION_REQ) anmelden und bei einer erfolgreichen Autorisierung durch einen Nutzer erhalten die neuen Geräte den Netzwerkschlüssel in einer KEY_OFFER Nachricht.

Es kann dazu kommen, dass ein Gerät zwischen der Nachricht a) und der Nachricht d) in den Schlafmodus versetzt wird. In diesem Fall empfängt das Gerät den Schlüssel gemäß Nachricht d) nicht. Wird ein solches Gerät durch Nutzerinteraktion, z.B. ein Ereignis, aufgeweckt, so sendet es erneut die Nachricht gemäß Schritt a). In diesem Fall liegt eine Autorisierung bereits vor und es kann unmittelbar im Anschluss an den Empfang einer Nachricht gemäß Schritt a) der Schlüssel gemäß Schritt d) verschickt werden, um sicherzustellen, dass der Schlüssel von dem Gerät empfangen wird, während es wach ist. Das heißt, dass eine Nachricht gemäß Schritt d) in Reaktion auf die Geräte-Autorisierung unmittelbar nach dem Empfang einer (der nächsten) Geräte-Einbindungs-Anfrage gesendet werden kann.

Ein Gerät kann ein Sensor und/oder ein Aktor sein.

Ein Sensor kann beispielsweise ein Schalter, ein Bewegungsmelder, ein Taster, ein Türkontakt, ein Thermostat, ein Fensterkontakt, ein Bildsensor, ein Helligkeitssensor, ein Temperatursensor, ein Binärsensor, ein Mikrofon, oder eine andere Einrichtung zum Erfassen von Umweltveränderungen sein.

Ein Aktor kann insbesondere ein Relais, ein Ventil, ein Motor, ein Stellmotor, ein Dimmer, eine Rolladensteuerung, ein Schalter, ein Signalgeber, ein Infrarotsignalgeber, ein akustischer Signalgeber, ein Bedienteil, ein Informationsterminal oder ein sonstiges Gerät zum Durchführen von Schaltvorgängen, Steuervorgängen, Regelvorgängen oder sonstigen Aktionen und/oder zum Ausgeben von Informationen und Zuständen sein.

Ein zentrales Steuergerät (Server, Smart Home Controller SHC) kann ein zentral angeordneter Rechner sein, der Steuerfunktionen übernimmt. Das zentrale Steuergerät kann aber auch ein beliebiges anderes Gerät sein, welches dazu eingerichtet ist, einen Netzwerkschlüssel zu verteilen. So können die Funktionen des genannten "zentralen" Steuergerätes z.B. auch von einem Router, einer Fernbedienung, Bediengeräten oder jedem anderen Gerät (Sensor, Aktor) in der Automatisierungsumgebung ausgeführt werden. Das zentrale Steuergerät (Server) kann Parameter für die Konfiguration von Sensoren und Aktoren überarbeiten und aussenden. Auch kann der Server für eine zentrale Kommunikationsschlüssel-Verwaltung zuständig sein. Insbesondere kann der Server für eine zentrale Bekanntmachung eines Netzwerkschlüssels verantwortlich sein. Der Server kann beispielsweise mit einem Weitverkehrsnetz verbunden sein. Hierbei ist es beispielsweise möglich, dass der Server über einen entsprechenden Router mit einem Weitverkehrsnetz, beispielsweise einem TCP/IP basiertes Weitverkehrsnetz verbunden ist. Insbesondere kann es möglich sein, auf den Server über das Weitverkehrsnetz zuzugreifen und aus der Ferne Konfigurationen vorzunehmen. Der Server kann dergestalt sein, dass er lediglich zu Konfigurationszwecken mit Sensoren und Aktoren kommuniziert. Das Heimautomatisierungssystem kann darüber hinaus so ausgelegt sein, dass eine Kommunikation zwischen Sensoren und Aktoren zur Steuerung in Reaktion auf Ereignisse erfolgt, ohne dass der Server zwischengeschaltet ist. Hierdurch lässt sich eine autarke Heimautomatisierung realisieren, die auch ohne einen Server funktioniert. Dies ist jedoch nur dann sicher möglich, wenn ein Netzwerkschlüssel für die Verschlüsselung von Kommunikation bei den Geräten bekannt ist.

Mit dem beschriebenen Verfahren ist es möglich, Netzwerkschlüssel zuverlässig auszutauschen. Grundlegend ist ein Schlüsselaustausch nicht kryptografisch sicher, da hierzu ein Verfahren wie DIFFIE-HELLMANN oder Zertifikate verwendet werden müssten. Ein potenzieller Angreifer muss im beschriebenen Verfahren jedoch im richtigen Moment den temporären Schlüssel aus der Geräte-Einbindungs-Anfrage (INCLUSION_REQ) mitschneiden, dann, nach dem (zeitig zufälligen) Autorisieren des neuen Gerätes die KEY_OFFER Nachricht mitschneiden und entschlüsseln um so an den Netzwerkschlüssel zu gelangen. Diese beiden seltenen und zufälligen Zeitpunkte bieten eine hinlängliche Sicherheit im privaten Anwendungsbereich.

Ein neues Gerät im Sinne des Anspruchs 1 kann sowohl ein Gerät sein, welches neu in das Heimautomatisierungsnetz eingebunden wird oder auch ein Gerät, welches in den Auslieferungszustand zurückgesetzt wurde. Auch ist es möglich, dass ein neues Gerät ein solches Gerät ist, welches aus dem bestehenden Heimautomatisierungssystem exkludiert wurde und neu eingebunden werden soll.

Das Ermitteln zumindest einer Geräte-Identifikation und eines temporären Schlüssels aus der Geräte-Einbindungs-Anfrage kann beispielsweise auch bedeutet, dass lediglich die Geräte-Identifikation aus der Geräte-Einbindungs-Anfrage ermittelt wird und der temporäre Schlüssel dann in der Zentrale erzeugt wird. Beim anschließenden Schritt d) kann dann der Netzwerkschlüssel mit dem temporären Schlüssel verschlüsselt werden und anschließend kann der verschlüsselte Netzwerkschlüssel zusammen mit dem temporären Schlüssel (im Klartext) an das Gerät übertragen werden. In diesem Fall wird der Netzwerkschlüssel verschlüsselt und der temporäre Schlüssel im Klartext übertragen. Ein Angreifer kann jedoch ohne Kenntnis des Übertragungsprotokolls den verschlüsselten Netzwerkschlüssel nicht einfach Mithören und Abgreifen, sondern muss zum Einen das Übertragungsprotokoll kennen und zum Anderen den temporären Schlüssel mitschneiden, der bei der Übertragung des verschlüsselten Netzwerkschlüssels mitgesendet wird.

Um sicherzustellen, dass der Netzwerkschlüssel auch bei dem Gerät empfangen wurde, wird gemäß einem vorteilhaften Ausführungsbeispiel vorgeschlagen, dass das Aussenden des verschlüsselten Netzwerkschlüssels (KEY_OFFER 64) in Reaktion auf die Geräte-Autorisierung (62, 72) unmittelbar nach dem Empfang einer Geräte-Einbindungs-Anfrage nach Schritt a) erfolgt und/oder dass nach dem Aussenden des Netzwerkschlüssels der Empfang einer Schlüssel-Empfangs-Bestätigungsnachricht (KEY_ACK) überwacht wird. Hierdurch kann der zentrale Steuerrechner überwachen, ob der Netzwerkschlüssel tatsächlich in dem Gerät empfangen und entschlüsselt wurde. Das Gerät antwortet mit einer KEY_ACK Nachricht und ist danach Bestandteil des Netzwerks.

In Schritt b) wird zumindest die Geräte-Identifikation mit Hilfe der Geräte-Einbildungs-Anfrage übermittelt. Diese Geräte-Identifikation kann zur Anzeige als auch zur Autorisierung verwendet werden.

Im Rahmen der Autorisierung ist es möglich, dass steuerrechnerseitig, sobald eine Geräte-Autorisierung erfolgt ist und das Gerät autorisiert wurde, ein Netzwerkschlüssel mit dem Temporärschlüssel, der entweder im Gerät erzeugt wurde und mit der Geräte-Einbindungs-Anfrage übertragen wurde oder der steuerrechnerseitig erzeugt wurde, verschlüsselt werden. Der mit dem Temporärschlüssel verschlüsselte Netzwerkschlüssel kann dann zusätzlich mit einem permanent in dem Steuerrechner gespeicherten Geräteschlüssel verschlüsselt werden. Der Geräteschlüssel kann steuerrechnerseitig anhand der Geräte-Identifikation ermittelt werden. Der Geräteschlüssel kann sowohl in dem Gerät als auch in dem Steuerrechner bekannt sein. Hierbei kann eine ein-eindeutige Zuordnung zwischen Geräte-Identifikation und Geräteschlüssel vorliegen. Es kann in dem Steuerrechner anhand der Geräte-Identifikation eine gerätespezifische Verschlüsselung des Netzwerkschlüssels, insbesondere des mit dem Temporärschlüssel verschlüsselten Netzwerkschlüssels, erfolgen. Der so mit Temporärschlüssel und/oder Geräteschlüssel verschlüsselte Netzwerkschlüssel kann an das Gerät übermittelt werden. Außerdem kann der Temporärschlüssel an das Gerät übermittelt werden.

Bei der Kommunikation zwischen Gerät und Steuerrechner kann der Temporärschlüssel zusammen mit dem mit Geräteschlüssel und Temporärschlüssel verschlüsselten Netzwerkschlüssel im Klartext an das Gerät übertragen werden. Selbst wenn der Temporärschlüssel mitgehört würde, könnte eine Entschlüsselung des Netzwerkschlüssels nicht erfolgen, da dieser noch zusätzlich mit dem Geräteschlüssel verschlüsselt ist.

In dem Gerät wird anschließend der mit dem Geräteschlüssel und Temporärschlüssel verschlüsselte Netzwerkschlüssel zunächst mit dem Geräteschlüssel entschlüsselt. Der Geräteschlüssel ist im Gerät bekannt und kann zur Entschlüsselung verwendet, jedoch nicht ausgelesen werden. Der nunmehr nur noch mit dem Temporärschlüssel verschlüsselte Netzwerkschlüssel kann anschließend mit dem im Gerät bekannten Temporärschlüssel entschlüsselt werden und der Netzwerkschlüssel liegt in dem Gerät zur weiteren Verwendung vor.

Zur Verschlüsselung des Netzwerkschlüssels bzw. des mit dem Temporärschlüssel verschlüsselten Netzwerkschlüssels ist ein individueller Geräteschlüssel notwendig. Dieser kann beispielsweise in einem Geräteschlüsseldienst/-server vorliegen. So ist es beispielsweise möglich, dass der mit dem Temporärschlüssel verschlüsselte Netzwerkschlüssel von dem Steuerrechner an den Geräteschlüsseldienst/-server übertragen wird. Außerdem wird die Geräte-Identifikation von dem Steuerrechner an den Geräteschlüsseldienst/-server übertragen. In dem Geräteschlüsseldienst/-server wird mit Hilfe der Geräte-Identifikation ein Geräteschlüssel ermittelt. Mit Hilfe des Geräteschlüssels wird der mit dem Temporärschlüssel verschlüsselte Netzwerkschlüssel verschlüsselt. Der dann mit dem Geräteschlüssel und dem Temporärschlüssel verschlüsselte Netzwerkschlüssel wird von dem Geräteschlüsseldienst/-server an den Steuerrechner und von dort an das Gerät übertragen.

Der Geräteschlüsseldienst/-server kann ein einziger Schlüsselserver sein. Auch kann der Geräteschlüsseldienst/- server aus einer Mehrzahl von Servern gebildet sein. Der Steuerrechner kann z.B. in einer Konfigurationsdatei die Adresse zumindest eines Schlüsselservers gespeichert haben. Auch ist es möglich, dass ein zentraler Schlüsselserver in dem zentralen Steuerrechner bekannt ist, der zentrale Schlüsselserver jedoch Anfragen von zentralen Steuerrechnern dynamisch an weitere Schlüsselserver weiterleiten, um somit eine Laststeuerung zu erzielen.

Ein weiteres Steuergerät, das beispielsweise ebenfalls die Geräte-Einbindungs-Anfrage empfangen hatte und den temporären Schlüssel zwischengespeichert hatte und danach versucht über eine KEY_OFFER Nachricht das Gerät in das eigene Netzwerk zu inkludieren, erhält von dem Gerät beispielsweise eine Schlüssel-Empfang-Abweisungsnachricht (KEY_NAK). Der Benutzer des zweiten Steuergeräts erhält somit beispielsweise über eine Anzeige eine Information, dass das Gerät in ein anderes Netzwerk inkludiert worden ist.

Ist der Benutzer des zweiten Steuergerätes jedoch im Besitz des in einem fremden Netzwerk inkludierten Gerätes und erhält er, nachdem er das Gerät einbinden wollte, eine KEY_NAK Nachricht, kann der Benutzer selber das in seinem Besitz befindliche Gerät in den Auslieferungsstand zurücksetzen und somit die Einbindung in das fremde Netzwerk löschen und einen erneuten Einbindungsversuch unternehmen.

Gemäß einem vorteilhaften Ausführungsbeispiel wird vorgeschlagen, dass erst nach dem Empfangen der Schlüssel-Empfang-Bestätigungsnachricht das neue Gerät von dem Steuergerät in das Heimautomatisierungssystem eingebunden wird. Hiermit wird sichergestellt, dass das zentrale Steuergerät den korrekten Austausch des Netzwerkschlüssels mit dem neuen Gerät überwacht und erst bei einem korrekten Austausch das Gerät in das Netzwerk einbindet.

Um das Risiko, dass ein nicht gewünschtes zentrales Steuergerät die Geräte-Einbindungs-Anfrage oder wie nachfolgend Beschrieben eine Einbindungs-Suche-Nachricht (INCLUSION_DISCOVER) empfängt, wird gemäß einem vorteilhaften Ausführungsbeispiel vorgeschlagen, dass das zentrale Steuergerät erst durch Aktivieren eines Einbindungs-Modus in die Lage versetzt wird, solche Nachrichten von einem neuen Gerät zu empfangen und/oder auszuwerten. Das Aktivieren eines Einbindungs-Modus kann beispielsweise durch Nutzerinteraktionen, beispielsweise durch Öffnen einer Einbindungs-Seite im Steuergerät erfolgen.

Beispielsweise ist es möglich, dass ein solcher Einbindungs-Modus eine bestimmte Zeitspanne, beispielsweise 5 Minuten, aktiv bleibt und danach automatisch deaktiviert wird. Innerhalb dieser Zeitspanne kann das zentrale Steuergerät von den neuen Geräten Geräte-Einbindungs-Anfragen auswerten. Außerhalb dieser Zeitspanne können die Geräte-Einbindungs-Anfragen ignoriert werden. Auch ist es möglich, dass Geräte-Einbindungs-Anfragen durch das zentrale Steuergerät ausgewertet werden und insbesondere die Geräte-Identifikation ermittelt wird. Mit Hilfe der Geräte-Identifikation ist es möglich, festzustellen, ob ein Gerät bereits in das Netzwerk eingebunden war und gegebenenfalls auf Werkseinstellung zurückgesetzt wurde. In diesem Fall wurde bereits zuvor eine Autorisierung des Gerätes vorgenommen und der Steuerrechner kennt diese Autorisierung. Dem Benutzer kann dann angeboten werden, die Autorisierung zu widerrufen und das Gerät aus dem Heimautomatisierungssystem zu entfernen, das Gerät wieder in das Heimautomatisierungssystem einzubinden und dabei erneut den Netzwerkschlüssel (vorzugsweise verschlüsselt) übertragen oder auch das Gerät als ein neues Gerät in das Heimautomatisierungssystem einzubinden, wobei dem Gerät dann andere Parameter und Einstellungen zugeordnet werden können. Auch ist es möglich, dass im Auslieferzustand des Heimautomatisierungssystems der zentrale Steuerrechner und zumindest ein Gerät miteinander verknüpft sind. Das heißt, dass in dem zentralen Steuerrechner bereits die Geräte-Identifikation des zu diesem Steuerrechner gehörenden Gerätes abgespeichert ist. In diesem Fall kann anhand der Geräte-Identifikation erkannt werden, dass das Gerät zu der zentralen Steuereinrichtung gehört. Eine Einbindung kann dann beispielsweise auch außerhalb des Einbindungs-Modus erfolgen. Auch ist es möglich, dass eine Autorisierung nicht mehr notwendig ist, da das Gerät bereits werkseitig dem zentralen Steuerrechner zugeordnet ist.

Gemäß einem vorteilhaften Ausführungsbeispiel wird vorgeschlagen, dass vor dem Schritt a) in einem Schritt a0) eine Einbindungs-Suche-Nachricht (INCLUSION_DISCOVER) des neue Geräts empfangen wird. Durch den Schritt a0) wird ein zweistufiges Verfahren aktiviert, welches zunächst fordert, dass die neuen Geräte sich gegenüber zentralen Steuergeräten durch eine Einbindungs-Suche-Nachricht kenntlich machen. Das Gerät sendet, nach Aktivieren eines Inklusions-Modus an dem Gerät, eine Einbindungs-Suche-Nachricht (INCLUSION_DISCOVER), um anzuzeigen, dass es noch keinen Netzwerkschlüssel hat und von einem Steuergerät in ein Netzwerk inkludiert werden möchte. Somit wird bevorzugt eine Einbindungs-Suche-Nachricht von einem neuen Gerät nur dann ausgesendet, wenn es in einen Einbindungs-Modus gebracht wurde und noch keinen Netzwerkschlüssel gespeichert hat.

Um dem Steuergerät zu ermöglichen, das neue Gerät, welches das Einbinden in das Netzwerk wünscht, zu identifizieren, wird gemäß einem vorteilhaften Ausführungsbeispiel vorgeschlagen, dass zusammen mit der Einbindungs-Suche-Nachricht eine Geräteidentifikation des neuen Gerätes übermittelt wird. Mit Hilfe der Geräteidentifikation ist es zum Einen möglich, das neue Gerät zu identifizieren. Zum Anderen ist es möglich, gezielt diesem Gerät mittels der Geräte-Identifikation zu antworten. So kann in der Antwort des zentralen Steuergeräts die Geräte-Identifikation verwendet werden um das Gerät, welches die Einbindungs-Suche-Nachricht ausgesendet hat, zu adressieren.

Gemäß einem vorteilhaften Ausführungsbeispiel wird vorgeschlagen, dass nach dem Schritt a0) und vor dem Schritt a) in einem Schritt a1) eine Einbindungs-Angebots-Nachricht (INCLUSION_OFFER) an das neue Gerät ausgesendet wird. Ist ein Steuergerät im Einbindungs-Modus und empfängt eine Einbindungs-Suche-Nachricht, antwortet das Steuergerät mit einer Einbindungs-Angebot-Nachricht (INCLUSION_OFFER). Die Anbindungs-Angebot-Nachricht ist bevorzugt mittels der Geräte-Identifikation eindeutig einem neuen Gerät zugeordnet. Mittels der Einbindungs-Angebots-Nachricht signalisiert das Steuergerät dem neuen Gerät, dass es bereit ist, einen Netzwerkschlüssel auszusenden. Das neue Gerät erhält mittels der Einbindungs-Angebots-Nachricht die Information, dass sich das Steuergerät ebenfalls im Einbindungs-Modus befindet und einen temporären Schlüssel empfangen kann. Somit wird sichergestellt, dass die temporären Schlüssel nur dann von neuen Geräten ausgesendet werden, wenn tatsächlich Steuergeräte vorhanden sind, die im Einbindungs-Modus den Empfang des temporären Schlüssels im Rahmen einer Geräte-Einbindungs-Anfrage (INCLUSION_REQ) empfangen können. Somit wird die Anzahl der Male, zu denen der temporäre Schlüssel ausgesendet wird, verringert.

Gemäß einem vorteilhaften Ausführungsbeispiel wird vorgeschlagen, dass der in Schritt b) empfangene Schlüssel aus zumindest zwei Schlüsseln gebildet ist, wobei ein erster Schlüssel ein temporär in dem Gerät erzeugter Schlüssel ist, der mit einem permanent in dem Gerät gespeicherten Schlüssel verschlüsselt ist. Der temporäre Schlüssel kann in einem oder mehreren Steuergeräten zwischengespeichert werden. Der temporäre Schlüssel kann z.B. nach jedem Zurücksetzen des Gerätes in den Auslieferungszustand neu generiert werden, um auch bei Weitergabe von Geräten die Sicherheit zu gewährleisten. Um jedoch zu verhindern, dass der temporäre Schlüssel von einem Fremden abgehört wird, kann der temporäre Schlüssel mit einem permanent in dem Gerät gespeicherten Schlüssel verschlüsselt werden. Ein solcher permanent in dem Gerät gespeicherter Schlüssel kann beispielsweise vorher im Produktionsprozess definiert sein. Solange ein solcher vordefinierter Schlüssel nicht bekanntgegeben wird, sondern nur in den Geräten und den zentralen Steuergeräten hinterlegt ist, ist die Verschlüsselung des temporären Schlüssels sicher, da dieser mit dem permanent gespeicherten Schlüssel verschlüsselt ist.

Auch ist es möglich, dass der temporäre Schlüssel im Klartext zwischen Gerät und Steuergerät ausgetauscht wird. Dies kann sowohl im Rahmen der Geräte-Einbindungs-Anfrage von dem Gerät an das Steuergerät erfolgen als auch beim Aussenden des verschlüsselten Netzwerkschlüssels in Reaktion auf die Geräte-Autorisierung von dem Steuergerät an das Gerät.

Ein sicherer Schlüsselaustausch ist beispielsweise mit Hilfe des Schlüsselservers möglich. Der temporäre Schlüssel kann dabei im Steuergerät und im Gerät bekannt sein und auf der Strecke zwischen Steuergerät und Gerät im Klartext übertragen werden. Der Geräteschlüssel ist lediglich dem Gerät und dem Schlüsselserver bekannt und wird nicht unverschlüsselt übertragen. Schließlich ist der Netzwerkschlüssel lediglich in dem Steuergerät bekannt und soll dem Gerät bekannt gemacht werden, nicht jedoch dem Schlüsseldienstserver. Um dies zu erreichen, wird der in dem Steuergerät bekannte Netzwerkschlüssel zunächst mit dem Temporärschlüssel verschlüsselt. Dann wird der mit dem Temporärschlüssel verschlüsselte Netzwerkschlüssel an den Schlüsseldienstserver zusammen mit der Geräte-Identifikation übertragen. Da der Schlüsseldienstserver den temporären Schlüssel nicht kennt, kann er den Netzwerkschlüssel nicht entschlüsseln. Der Schlüsseldienstserver verschlüsselt den mit dem Temporärschlüssel verschlüsselten Netzwerkschlüssel mit dem Geräteschlüssel. Dieser so verschlüsselte Netzwerkschlüssel wird von dem Schlüsseldienstserver an das Steuergerät übertragen und von dort weiter an das Gerät. Auf der Übertragungsstrecke zwischen Steuergerät und Gerät hätte der Temporärschlüssel abgehört werden können. Da der Netzwerkschlüssel auf der Strecke zwischen Steuergerät und Gerät jedoch zusätzlich mit dem Geräteschlüssel verschlüsselt wurde, ist es unmöglich, auch in Kenntnis des Temporärschlüssels, den Netzwerkschlüssel zu entschlüsseln, ohne den Geräteschlüssel zu kennen. Da der Geräteschlüssel nur in dem Gerät und dem Schlüsseldienstserver bekannt ist, kann ein Angreifer den Netzwerkschlüssel nicht abhören. In dem Gerät ist der Temporärschlüssel bekannt. Dieser wurde entweder in dem Gerät erzeugt oder im Rahmen der Nachricht nach Schritt d) im Klartext übertragen. In dem Gerät wird dann der mit dem Temporärschlüssel und dem Geräteschlüssel verschlüsselte Netzwerkschlüssel zunächst mit dem Geräteschlüssel entschlüsselt. Anschließend wird der Temporärschlüssel verwendet, um den Netzwerkschlüssel, der nur noch mit dem Temporärschlüssel verschlüsselt ist, zu entschlüsseln. In dem Gerät liegt dann der Netzwerkschlüssel vor und kann für die weitere Kommunikation verwendet werden.

Gemäß einem vorteilhaften Ausführungsbeispiel wird vorgeschlagen, dass die Geräteautorisierung durch eine Benutzerinteraktion erfolgt oder dadurch, dass eine zentral gespeicherte Zuordnung zwischen Geräte-Identifikation und Steuergerät abgefragt wird und bei einem positiven Abfrageergebnis eine Autorisierung automatisch erfolgt. Zum einem ist es möglich, dass nutzergesteuert die Autorisierung erfolgen kann. Hierzu kann die Geräte-Identifikation einem Benutzer an einer Anzeige angezeigt werden und der Benutzer aufgefordert werden, das entsprechende Gerät zu autorisieren. Andererseits ist es auch möglich, dass eine Autorisierung automatisch erfolgt. So kann beispielsweise eine Verknüpfung zwischen Gerät und Steuergerät in einem Logistiksystem bereits abgelegt werden. Beispielsweise kann der Kunde beim Kauf eines Gerätes das entsprechende Steuergerät mit dem neuen Gerät verknüpfen, indem er beispielsweise eine Steuergerätenummer angibt. Wird nun eine Autorisierung gefordert, kann das Steuergerät beispielsweise über das Internet, auf so gespeicherte Verknüpfungen zurückgreifen und feststellen, dass das neue Gerät zu dem Steuergerät zugeordnet ist. Ist dies der Fall, kann eine Autorisierung automatisch, d.h. ohne Benutzerinteraktion erfolgen.

Gemäß einem vorteilhaften Ausführungsbeispiel wird vorgeschlagen, dass die in Schritt a1) ausgesendete Einbindungs-Angebots-Nachricht eine Steuergerät-Identifikation enthält und dass die in dem Schritt a) empfangene Geräte-Einbindungs-Anfrage die Steuergerät-Identifikation enthält. Mit der Steuergerät-Identifikation ist es für das Gerät möglich, die Geräte-Einbindungs-Anfrage an das Steuergerät zu adressieren.

Gemäß einem vorteilhaften Ausführungsbeispiel wird vorgeschlagen, dass ein Einbindungs-Modus des Steuergeräts durch eine Nutzerinteraktion aktiviert wird und dass nur in dem Einbindungs-Modus Nachrichten nach Schritt a0) und/oder a) empfangbar und/oder auswertbar sind und/oder dass der Einbindungs-Modus nach einer definierten Zeit nach der Nutzerinteraktion deaktiviert wird. Wie bereits zuvor beschrieben, wird durch das Aktivieren eines Einbindungs-Modus durch eine Nutzerinteraktion verhindert, dass Steuergeräte jederzeit im Einbindungs-Modus sind und somit ständig Konkurrenzsituationen zwischen zwei Steuergeräten, die eigentlich zwei getrennten Netzwerken zugeordnet sind, entstehen.

Somit werden beispielsweise INCLUSION_DISCOVER Nachrichten von Steuergeräten nur dann beantwortet, wenn sie im Einbindungs-Modus sind, INCLUSION REQ Nachrichten werden beispielsweise nur beantwortet, wenn die INCLUSION REQ Nachricht im Einbindungs-Modus empfangen und ausgewertet wurde und/oder die Autorisierung des Geräts bereits zuvor stattgefunden hat, was das Risiko verhindert, dass falsche Netzwerkschlüssel an Neugeräte kommuniziert werden.

Ein weiterer Aspekt ist ein Verfahren nach Anspruch 10.

Mittels dieses Verfahrens ist es in dem neuen Gerät möglich, eine Einbindung in ein Netzwerk von einem zentralen Steuergerät anzufordern und einen Netzwerkschlüssel von dem zentralen Steuergerät in einer sicheren Art und Weise zu empfangen.

Gemäß einem vorteilhaften Ausführungsbeispiel wird vorgeschlagen, dass vor dem Schritt b) in einem Schritt b0) eine Einbindungs-Suche-Nachricht ausgesendet wird. Mit Hilfe der Einbindungs-Suche-Nachricht signalisiert das neue Gerät gegenüber einem Steuergerät, dass es in das Netzwerk eingebunden werden möchte. Diese Einbindungs-Suche-Nachricht wird vorzugsweise im Broadcast-Modus ausgesendet, so dass alle in Kommunikationsreichweite befindlichen Steuergeräte diese Nachricht empfangen.

Um sicherzustellen, dass möglichst viele Steuergeräte in Kommunikationsreichweite eine solche Einbindungs-Suche-Nachricht empfangen, wird vorgeschlagen, dass der Schritt b0) nach dem Ereignis in einer vorgebbaren Anzahl wiederholt wird. Solche "Retries" erhöhen die Wahrnehmbarkeit der Nachricht und die Möglichkeit, dass Steuergeräte diese Nachricht empfangen. Auch können die Schritte nach a) eine vorgegebene Anzahl oder Zeit durchgeführt werden.

Um zu verhindern, dass nachdem eine Einbindungs-Suche-Nachricht ausgesendet wird, zu einer beliebigen Zeit von einem Steuergerät eine Einbindung erfolgt, wird gemäß einem vorteilhaften Ausführungsbeispiel vorgeschlagen, dass nach dem Schritt b0) eine vorgebbare Zeit der Empfang einer Einbindungs-Angebots-Nachricht überwacht wird. Somit wird eine bestimmte Zeit nachdem eine Einbindungs-Suche-Nachricht ausgesendet wird, auf eine Einbindungs-Angebots-Nachricht gewartet.

Gemäß einem vorteilhaften Ausführungsbeispiel wird vorgeschlagen, dass beim Ausbleiben der Einbindungs-Angebots-Nachricht oder einer Geräte-Einbindungs-Anfrage das Gerät deaktiviert (in den Schlafmodus versetzt) wird. Dies spart Strom, da somit nur eine bestimmte Zeit nach der Nutzerinteraktion das Gerät auf eine Antwort von einem zentralen Steuergerät warten muss.

Gemäß einem vorteilhaften Ausführungsbeispiel wird vorgeschlagen, dass nach dem Schritt b0) bei einem Empfang einer Einbindungs-Angebots-Nachricht die Geräte-Einbindungs-Anfrage versendet wird. Dies stellt sicher, dass der temporäre Schlüssel auch nur dann versendet wird, wenn zumindest ein Steuergerät potentiell den Empfang einer Geräte-Einbindungs-Anfrage erwartet. Verfügt das Gerät über eine graphische Benutzeroberfläche, kann eine Geräte-Einbindungs-Anfrage auch benutzergesteuert an ein auswählbares Steuergerät versendet werden. Hierdurch kann der Benutzer auswählen, mit welchem Steuergerät das Gerät verbunden werden soll.

Gemäß einem vorteilhaften Ausführungsbeispiel wird auch vorgeschlagen, dass das den Einbindungs-Modus aktivierende Ereignis eine Benutzerinteraktion, ein Einschalten des Gerätes oder ein Zurücksetzen des Gerätes in den Auslieferungszustand ist, wobei der Einbindungs-Modus beispielsweise ausschließlich für den Fall aktiviert wird, dass noch kein Netzwerkschlüssel in dem Gerät empfangen wurde.

Gemäß einem vorteilhaften Ausführungsbeispiel wird vorgeschlagen, dass der Netzwerkschlüssel zusammen mit einer Steuergeräte-Identifikation empfangen wird. Somit ist es in dem neuen Gerät möglich, den Netzwerkschlüssel einem Steuergerät zuzuordnen und dem Steuergerät den Empfang des Netzwerkschlüssels zu quittieren.

Aus diesem Grunde wird gemäß einem vorteilhaften Ausführungsbeispiel vorgeschlagen, dass der empfangene Netzwerkschlüssel durch Verwendung der Steuergeräte-Identifikation gegenüber dem Steuergerät mit einer Schüssel-Empfang-Bestätigungsnachricht (KEY_ACK) bestätigt wird. Mit Hilfe dieser Nachricht kann das Steuergerät sicherstellen, dass der Netzwerkschlüssel korrekt in dem neuen Gerät empfangen wurde.

Gemäß einem vorteilhaften Ausführungsbeispiel wird vorgeschlagen, dass für den Fall, dass bereits zuvor ein anderer Netzwerkschlüssel empfangen wurde, eine Schlüssel-Empfang-Abweisungsnachricht (KEY_NAK) ausgesendet wird. Mit Hilfe dieser Nachricht kann das zentrale Steuergerät feststellen, dass das neue Gerät bereits von einem anderen Steuergerät eingebunden wurde. Für den Benutzer ergibt sich hieraus der Vorteil, dass er kontrollieren kann, ob ein ihm gehörendes Gerät von einem anderen Steuergerät eingebunden wurde. In einem solchen Fall kann er das Gerät zurücksetzen, um einen neuen Einbindungsversuch mit dem eigenen Steuergerät zu starten.

Ein weiterer Aspekt ist ein zentrales Steuergerät für ein Heimautomatisierungssystem nach Anspruch 14.

Ein weiterer Aspekt ist ein Gerät für ein Heimautomatisierungssystem nach Anspruch 15.

Am Eingang des Gerätes kann gegenständlich ein Ereignis detektiert werden. Ein Ereignis kann eine Benutzerinteraktion, beispielsweise das Betätigen eines Schalters oder Tasters, eine Veränderung von Umweltbedingungen, eine Bewegung, ein Öffnen eines Fensters, eine Temperaturänderung oder eine sonstige Veränderung von Umgebungsbedingungen sein.

Beim Detektieren eines Ereignisses kann das Gerät, bevorzugt ein eigengespeistes (akkumulatorbetriebenes) Gerät, aufwachen und in einen Aktivmodus versetzt werden. Gegenständlich ist es möglich, dass das Gerät im Normalzustand in einem Ruhezustand (Schlafmodus) ist. In diesem Ruhezustand wird lediglich der Eingang auf das Auftreten eines Ereignisses überwacht. Sämtliche weitere Funktionen können entweder deaktiviert oder mit einer minimalen Leistungsaufnahme aufrechterhalten werden. Insbesondere kann die Kommunikation über eine Kommunikationsschnittstelle in diesen Zeiträumen ruhen, so dass weder Signale ausgesendet, noch Signale empfangen werden. Beim Detektieren eines Ereignisses kann das Gerät erwachen (in den Aktivmodus wechseln), derart, dass der Prozessor aktiviert wird und die Kommunikationsschnittstelle zur Kommunikation mit der Außenwelt aktiviert wird.

Der Prozessor kann beispielsweise ein digitaler Signalprozessor (DSP) sein. Auch kann der Prozessor ein Mikrocontroller sein. Der Prozessor kann ein beliebiger Mikroprozessor sein, der zum Einen zum Auswerten von Eingangssignalen und zum Anderen zum Ausgeben von Steuerungssignalen eingerichtet ist.

Die Kommunikationsschnittstelle an einem Gerät oder dem Steuergerät kann beispielsweise eine Einrichtung zur Kommunikation über ein Drahtlosnetzwerk sein. Auch kann die Kommunikationsschnittstelle über ein drahtgebundenen Netzes kommunizieren. Beispielsweise kann eine Kommunikation über LAN, WLAN, Bluetooth oder dergleichen erfolgen. Insbesondere kann die Kommunikationsschnittstelle beispielsweise bei einer Frequenz von 868Mz mit einem Frequenz Shift Key Nachrichten aussenden. Insbesondere sind Datenraten von 10KB/s möglich. Ein Zugriffsprotokoll kann beispielsweise ein CSMA/CA Zugriffsprotokoll sein.

Die Kommunikation mittels der Kommunikationsschnittstelle kann eine bidirektionale Kommunikation auf einem Bus, insbesondere einem Funkbus sein. Die Kommunikationsschnittstelle kann zur Verschlüsselung der übertragenen Daten eingerichtet sein. Insbesondere kann eine symmetrische Verschlüsselung durch die Kommunikationsschnittstelle unterstützt sein. Insbesondere kann eine CCM-Verschlüsselung oder CCM*-Verschlüsselung unterstützt sein. Insbesondere kann ein authentifiziertes Verschlüsselungsverfahren nach dem IEEE 802.11 Standard verwendet werden. Auch ist ein erweitetes Verschlüsselungsverfahren nach dem Advanced Encryption Standard Counter Mode (AES/CCM) möglich, bei dem ein 16Byte Block Chiffre verwendet wird. Für die symmetrische Verschlüsselung kann es möglich sein, dass jeder Sensor, jeder Aktor und jeder zentrale Steuerrechner (Server) eine Seriennummer aufweist. Auch kann es möglich sein, dass die Seriennummer eines jeden Gerätes in einer Zentrale bekannt ist. Die Kommunikation über die Kommunikationsschnittstelle kann im Multicast als auch im Unicast Modus erfolgen.

Die zuvor genannten Verfahren können auch als Computerprogramm oder als auf einem Speichermedium gespeichertes Computerprogramm realisiert werden. Hierbei kann sensorseitig, aktorseitig und/oder serverseitig ein Mikroprozessor zur Durchführung der jeweiligen Verfahrensschritte durch ein Computerprogramm geeignet programmiert sein. Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Nachfolgend wird der Gegenstand anhand einer Ausführungsbeispiele zeigenden Zeichnung näher erläutert.
- Fig. 1: zeigt schematisch ein Gerät, das als Sensor gebildet ist;
- Fig. 2: zeigt schematisch ein Gerät, das als Aktor gebildet ist;
- Fig. 3: zeigt einen schematischen Aufbau eines Heimautomatisierungssystems;
- Fig. 4: zeigt den Ablauf eines Verfahrens gemäß eines Ausführungsbeispiels;
- Fig. 5: zeigt den Ablauf eines Verfahrens gemäß einem weiteren beispielhaften Ausführungsbeispiel;
- Fig. 6: zeigt den Ablauf eines Verfahrens gemäß einem weiteren beispielhaften Ausführungsbeispiel;
- Fig. 7: zeigt den Ablauf eines Verfahrens gemäß einem weiteren beispielhaften Ausführungsbeispiel;
- Fig. 8: zeigt den Ablauf eines Verfahrens gemäß einem weiteren beispielhaften Ausführungsbeispiel;
- Fig. 9: zeigt den Ablauf eines Verfahrens gemäß einem weiteren beispielhaften Ausführungsbeispiel;
- Fig. 10: zeigt den Ablauf eines Verfahrens gemäß einem weiteren beispielhaften Ausführungsbeispiel;
- Fig. 11: zeigt den Ablauf eines Verfahrens gemäß einem weiteren beispielhaften Ausführungsbeispiel;
- Fig. 12: zeigt den Ablauf eines Verfahrens gemäß einem weiteren beispielhaften Ausführungsbeispiel.

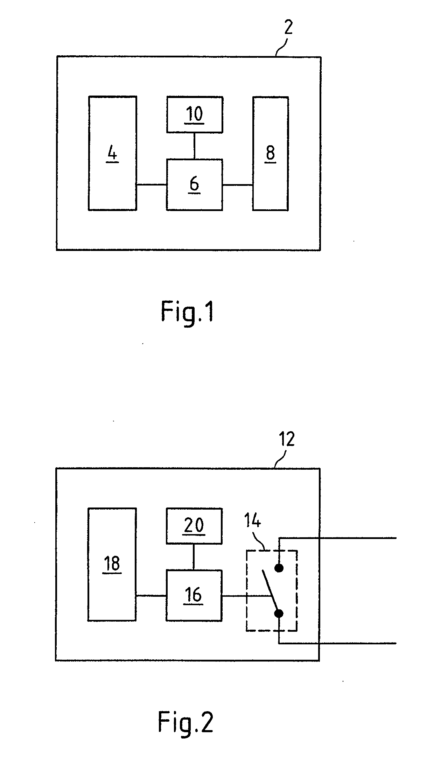

Fig. 1 zeigt schematisch einen Sensor 2 mit einem Tasterfeld 4, welches als Eingang zum Detektieren von Ereignissen verwendet wird. In dem Sensor 2 ist darüber hinaus ein Prozessor 6 angeordnet, zum Auswerten der detektierten Ereignisse an dem Tasterfeld 4. In dem Sensor 2 ist auch eine Funkschnittstelle 8 vorgesehen, welche über den Prozessor 6 angesteuert wird. Mittels der Funkschnittstelle 8 ist es möglich, über ein Funkprotokoll Nachrichten auszusenden und zu empfangen. Die Funkschnittstelle 8 ermöglicht eine Kommunikation über eine Luftschnittstelle. Ferner ist in dem Sensor 2 ein Speicher 10 angeordnet. In dem Speicher 10 können temporäre Schlüssel und Netzwerkschlüssel gespeichert werden. Mit Hilfe des Sensors 2 ist es möglich, Ereignisse zu erfassen und in entsprechende Nachrichten umzusetzen.

Fig. 2 zeigt einen Aktor 12. Der Aktor 12 weist einen Ausgang 14 auf, über den beispielsweise elektrische Verbraucher gesteuert werden können. Zu erkennen ist, dass in dem dargestellten Beispiel der Ausgang 14 mit einem Schalter verbunden ist, über den elektrische Kontakte am Ausgang 14 kurz geschlossen oder getrennt werden können. Der Ausgang 14 bzw. der Schalter wird über einen Prozessor 16 angesteuert, der ebenfalls in dem Aktor 12 angeordnet ist. Der Prozessor 16 ist mit einer Funkschnittstelle 18 verbunden. Über die Funkschnittstelle 18 können Daten über die Luftschnittstelle beispielsweise mit der Funkschnittstelle 8 als auch mit einem zentralen Server ausgetauscht werden.

Schließlich ist in dem Aktor 12 ein Speicher 20 angeordnet, in dem temporäre Schlüssel und Netzwerkschlüssel gespeichert sein können.

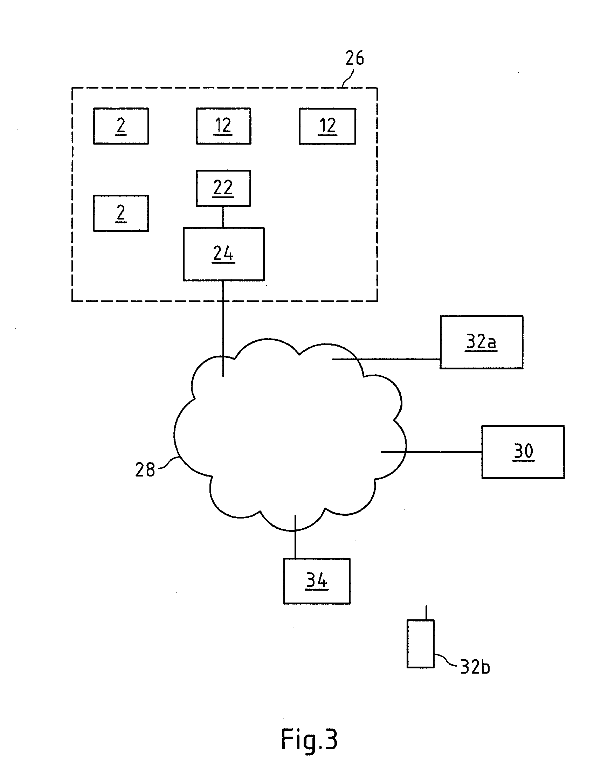

Die in Fig. 1 und 2 gezeigten Sensoren 2 und Aktoren 12 lassen sich in einem in Fig. 3 gezeigten Heimautomatisierungssystem einsetzen. Fig. 3 zeigt beispielsweise die Umgebung 26 eines Hauses oder einer Wohnung. In dieser Umgebung 26 ist ein Router 24 vorgesehen, der eine Kommunikationsverbindung mit dem Internet 28 zur Verfügung stellt und Datenpakete in das Internet 28 aussenden und aus dem Internet 28 empfangen kann. An den Router 24 ist ein Server 22 (Smart Home Controller SHC) angeschlossen. Über den Router 24 kann der SHC 22 Datenpakete mit dem Internet 28 austauschen. Der SHC 22 kann über eine Funkverbindung eine Kommunikation mit den Sensoren 2 als auch den Aktoren 12 aufbauen. Die Kommunikation kann bidirektional sein und auf Anforderungen erfolgen.

An das Internet 28 ist eine zentrale Verwaltungseinheit 30 angeschlossen. Die zentrale Verwaltungseinheit 30 kann über das Internet 28 und den Router 24 eine Kommunikation mit dem SHC 22 aufnehmen, um beispielsweise eine Konfiguration der Sensoren 2, der Aktoren 12 oder des SHCs 22 vorzunehmen.

Die Konfiguration des SHCs 22 als auch der Sensoren 2 und der Aktoren 12 über das Internet 28 kann beispielweise von einem privaten Personalcomputer 32a erfolgen. Hierzu kann der Personalcomputer 32a beispielsweise eine Verbindung über das Internet 28 mit der zentralen Verwaltungseinheit 30 aufbauen und mittels der zentralen Verwaltungseinheit 30 eine Konfiguration des SHCs 22, des Sensors 2 oder des Aktors 12 vornehmen. Diese Konfigurationsänderung kann dann über das Internet 28 von der zentralen Verwaltungseinheit 30 über den Router 24 zu dem SHC 22 übermittelt werden. Auch kann eine Konfiguration beispielsweise über ein Mobiltelefon 32b erfolgen, wobei das Mobiltelefon 32b über ein Gateway 34 mit dem Internet 28 verbunden ist und über das Gateway 34 eine Verbindung mit der zentralen Verwaltungseinheit 30 aufnehmen kann.

Eine sichere Kommunikation zwischen dem SHC 22 und der zentralen Verwaltungseinheit 30 kann beispielsweise dadurch gewährleistet sein, dass der SHC 22 mittels des Routers 24 einen Kommunikationstunnel durch das Internet 28 mit der zentralen Verwaltungseinheit 30 aufbaut, sobald der SHC 22 mit dem Router 24 verbunden wird. Hierzu muss der SHC 22 lediglich die feste IP-Adresse der zentralen Verwaltungseinheit 30 kennen und mittels eines Kennworts und eines Schlüssels die Kommunikation mit der zentralen Verwaltungseinheit 30 verschlüsseln. Über diese verschlüsselte Verbindung kann nun von der zentralen Verwaltungseinheit 30 eine Konfiguration des SHCs 22, des Sensors 2 als auch des Aktors 12 erfolgen. Die Konfiguration kann von dem Personalcomputer 32a oder dem Mobiltelefon 32b gesteuert werden. Auch ist es möglich, mittels des Personalcomputers 32a als auch des Mobiltelefons 32b Ereignisse am Sensor 2 zu generieren, um somit bestimmte Aktionen der Aktoren 12 auszulösen. Auch können Status von den Sensoren 2 und den Aktoren 12 so abgefragt werden.

Die Kommunikation zwischen SHC 22, Aktoren 12 und Sensoren 2 ermöglicht zum Einen die Konfiguration der Sensoren 2 und der Aktoren 12 als auch die Steuerung von an den Aktor 12 angeschlossenen elektrischen Verbrauchern mittels der Sensoren 2. Die Aktor-Steuerung wird durch Verknüpfungen zwischen einem Sensor 2 und Aktoren 12 als auch durch Sensor-Parameter und/oder Aktor-Parameter reguliert.

An die verschiedenen Aktoren 12 können verschiedenste elektrische Verbraucher angeschlossen werden. Bei der Konfiguration des Sensors 2 als auch der Aktoren 12 über den SHC 22 kann gegenständlich das Kommunikationsaufkommen mit einem Sensor 2 reduziert werden, so dass der energetisch eigengespeiste Sensor 2 möglichst wenig Energie verbraucht. Die Aktoren 12 können beispielsweise dauerhaft mit Energie versorgt werden, beispielsweise an eine Stromversorgung angeschlossen sein und somit dauerhaft Nachrichten empfangen und aussenden. Auch können die Aktoren 12 derart eingerichtet sein, dass sie dauerhaft Nachrichten empfangen und in Abständen Nachrichten aussenden. Auch können die Aktoren 12 so eingerichtet sein, dass sie dauerhaft Nachrichten empfangen können und nur bei Bedarf Nachrichten aussenden. Die Energieeinsparung muss hauptsächlich an den Sensoren 2 erfolgen, welche energetisch eigengespeist sind.

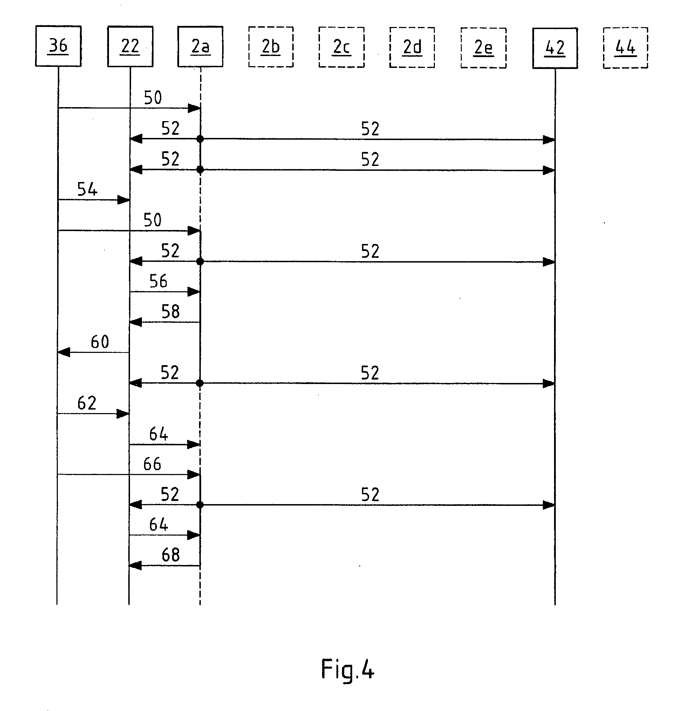

Fig. 4. zeigt beispielhaft die in einer Umgebung 26 eines Hauses angeordneten Geräte 2a-2e, 22. In Fig. 4 ist eine Nutzer 34 dargestellt. Ferner ist ein Server (zentraler Steuerrechner) 22 sowie ein Sensor 2a dargestellt. Darüber hinaus sind weitere Sensoren 2b, 2c, 2d und 2e dargestellt. Die Sensoren 2a-e könnten auch Aktoren sein. Der Sensor 2a ist ein durch Nutzerinteraktion aufwachender Sensor 2a. Der Sensor 2b ist ein synchronisiert aufwachender Sensor 2b. Der Sensor 2c ist ein zyklisch aufwachender Sensor 2c. Der Sensor 2d ist ein per Wake-up Burst aufwachender Sensor 2d und der Sensor 2e ist ein ständig aktiver Sensor 2e. Die nachfolgend gezeigte Kommunikation ist nur beispielhaft für Sensoren 2a und 2e beschrieben, lässt sich jedoch analog auch auf die Sensoren 2b-2d übertragen.

Ferner ist in der Fig. 4 ein außerhalb der Umgebung 26 angeordneter Server 42 dargestellt sowie ein zweiter Nutzer 44.

In der Fig. 4 als auch in den nachfolgenden Figuren sind die gleichen Geräte mit gleichen Bezugszeichen dargestellt. Ferner zeigen die Figs. 4 bis 12 die Nachrichtendiagramme in einem Nachrichtenfluss zwischen den Geräten, der mittels der Kommunikationsschnittstelle bevorzugt über eine Luftschnittstelle stattfindet.

Durchgezogene Linien bedeuten, dass die Geräte aktiv sind. Gepunktete Linie bedeutet, dass die Geräte inaktiv sind.

Fig. 4 zeigt ein Nachrichtendiagramm, bei dem ein nur durch Nutzeraktion aufwachendes Gerät in das Netzwerk eingebunden wird. Zu erkennen ist, dass der Nutzer 34 zunächst den Sensor 2a aktiviert 50. Nach einer Aktivierung 50 des Sensors 2a sendet der Sensor 2a INCLUSION_DISCOVER Nachrichten 52 im Broadcast-Modus aus. D.h., dass die INCLUSION_DISCOVER Nachricht 52 an keinen bestimmten Empfänger adressiert wird. Die INCLUSION_DISCOVER Nachricht 52 kann sowohl in dem ersten Steuergerät 22 als auch dem zweiten Steuergerät 44 empfangen werden. Bei dem ersten Aussenden der INCLUSION_DISCOVER Nachricht 52 sind weder das erste Steuergerät 22 noch das zweite Steuergerät 42 in einem Einbindungs-Modus, weshalb die Steuergeräte 22, 42 keine Antworten senden. Die INCLUSION_DISCOVER Nachricht 52 wird daher eine bestimmte Anzahl nacheinander ausgesendet, in dem gezeigten Beispiel zweimal, wonach der Sensor 2a wieder in den Schlafmodus versetzt wird.

Anschließend wird wie in Fig. 4 gezeigt, das erste Steuergerät 22 in den Einbindungs-Modus gebracht 54. Anschließend aktiviert 50 der Nutzer 34 den Sensor 2a. Der Sensor 2a sendet daraufhin erneut eine INCLUSION_DISCOVER Nachricht 52. Das Steuergerät 22 empfängt die INCLUSION_DISCOVER Nachricht 52 und da es sich im Einbindungs-Modus befindet, antwortet das Steuergerät 22 auf die INCLUSION_DISCOVER Nachricht 52 mit einer INCLUSION_OFFER Nachricht 54. In der INCLUSION_OFFER Nachricht 54 ist die Identifikation des Steuergeräts 22 enthalten.

Das Steuergerät 42 dagegen ist nicht im Einbindungs-Modus, weshalb vom Steuergerät 42 keine Antwort auf die INCLUSION_DISCOVER Nachricht 52 gesendet wird.

Nach Empfang der INCLUSION_OFFER Nachricht 56 antwortet der Sensor 2a mit einer INCLUSION_REQ Nachricht 58. In der INCLUSION_REQ Nachricht 58 ist zum Einen die Geräte-Identifikation des Sensors 2a enthalten und zum Anderen ein temporärer Schlüssel.

Der temporäre Schlüssel kann bei der ersten Inbetriebnahme des Sensors 2a generiert werden. Auch ist es möglich, dass der temporäre Schlüssel für jede INCLUSION_REQ Nachricht 58 neu generiert wird. Auch ist es möglich, dass der temporäre Schlüssel mit einem fest in dem Sensor 2a hinterlegten Schlüssel, der ebenfalls in dem Steuergerät 22 bekannt ist, verschlüsselt wird.

Auch ist es möglich, dass der temporäre Schlüssel nur im Steuergerät erzeugt wird und nicht in dem Sensor 2a.

Das Steuergerät 22 empfängt die INCLUSION_REQ Nachricht 58 und zeigt anhand der in der INCLUSION_REQ Nachricht 58 enthaltenen Geräte-Identifikation dem Benutzer 34 auf einer Anzeige die Identifikation des Sensors 2a an 60.

In dem gezeigten Beispiel reagiert der Benutzer 34 auf die Anzeige 60 nicht.

Da der Sensor 2a noch nicht in ein Netzwerk eingebunden ist, sendet er erneut eine INCLUSION_DISCOVER Nachricht 52 aus.

Nach einer unbestimmten Zeit autorisiert 62 der Benutzer 34 den Sensor 2a. Nach der Autorisierung 62 sendet das Steuergerät 22 eine KEY_OFFER Nachricht 64, in der ein Netzwerkschlüssel mit dem temporären Schlüssel verschlüsselt enthalten ist. Zusammen mit den verschlüsselten Netzwerkschlüssel kann der temporäre Schlüssel (für den Fall, dass dieser im Steuergerät 22 erzeugt wurde) im Klartext mitgesendet werden. Wie in der Fig. 4 zu erkennen ist, ist der Sensor 2a zu diesem Zeitpunkt im Schlafmodus und kann die KEY_OFFER Nachricht 64 nicht empfangen. Das Steuergerät 22 wartet auf eine KEY_ACK Nachricht 68, empfängt diese jedoch nicht, da der Sensor 2a im Schlafmodus ist und eine solche Nachricht nicht aussendet.

Bei einer erneuten Nutzerinteraktion 66 an den Sensor 2a wacht dieser auf. Der Sensor 2a hat zu diesem Zeitpunkt immer noch keinen Netzwerkschlüssel erhalten und sendet daraufhin erneut eine INCLUSION_DISOVER Nachricht 52 aus. Die INCLUSION_DISCOVER Nachricht 52 wird in dem Steuergerät 22 empfangen und anhand der in der INCLUSION_DISCOVER Nachricht 52 enthaltenden Geräte-Identifikation kann das Steuergerät 22 feststellen, dass der Benutzer 34 diesen Sensor 2a bereits im Schritt 62 autorisiert hat. Aus diesem Grunde sendet das Steuergerät 22 erneut eine KEY_OFFER Nachricht 64 an den Sensor 2a. Der Sensor 2a bestätigt den Empfang der KEY_OFFER Nachricht 64 mit einer KEY_ACK Nachricht 68.

Daraufhin hat der Sensor 2a den Netzwerkschlüssel erhalten und das Steuergerät 22 weiß, dass der Sensor 2a diesen Netzwerkschlüssel hat, womit der Sensor 2a in dem Netzwerk eingebunden ist.

Wie in der Fig. 4 zu erkennen ist, antwortet das Steuergerät 42 auf keine INCLUSION_DISCOVER Nachricht 52, so dass das Steuergerät 42 den Sensor 2a nicht einbindet.

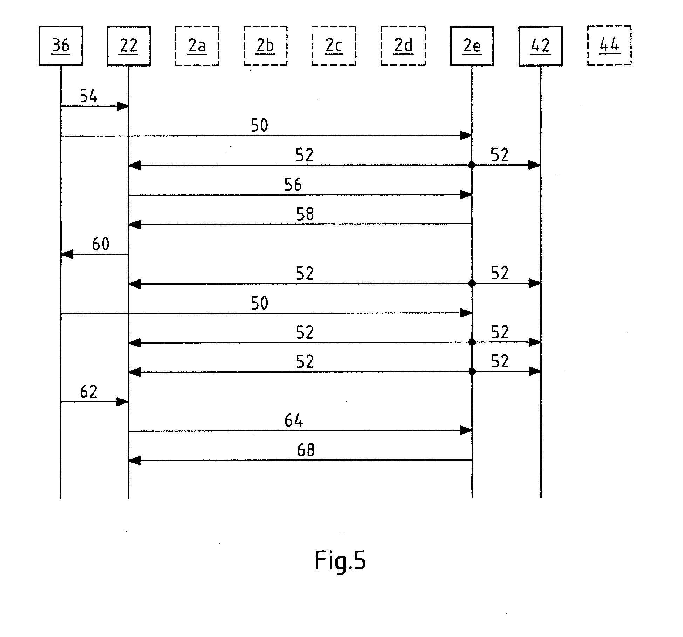

Fig. 5 zeigt den Ablauf einer Einbindung eines Gerätes, wobei das Gerät in der Fig. 5, welches eingebunden werden soll, Sensor 2e ist, der ständig empfangsbereit ist. Die Fig. 5 zeigt, dass der Einbindungs-Modus des Steuergeräts 22 durch den Benutzer 34 aktiviert 54 wird. Danach wird der Einbindungs-Modus am Sensor 2e aktiviert 50. Somit sind sowohl Steuergerät 22 als auch Sensor 2e im Einbindungs-Modus. Der Ablauf der nachfolgenden Schritte entspricht in etwa dem in Fig. 4 beschriebenen Ablauf.

Auf eine INCLUSION_DISCOVER Nachricht 52 antwortet das Steuergerät 22, das im Einbindungs-Modus ist, mit einer INCLUSION_OFFER Nachricht 56, die von dem Sensor 2e durch eine INCLUSION_REQ Nachricht 58 beantwortet wird.

Der Sensor 2e wird dem Benutzer angezeigt 60. Solange der Benutzer das Gerät nicht autorisiert, erfolgt keine Übermittlung einer KEY_OFFER Nachricht 64. D.h., dass der Sensor 2e nach einer bestimmten Zeit erneut eine INCLUSION_DISCOVER Nachricht 52 aussendet. Nach einer bestimmten Zeit kann es vorkommen dass der Sensor 2e den Einbindungs-Modus verlässt. Der Einbindungs-Modus muss daraufhin erneut aktiviert 50 werden, woraufhin der Sensor 2e erneut INCLUSION_DISCOVER Nachrichten 52 aussendet.

Erst bei der Autorisierung 62 des Sensors 2e durch den Nutzer 34 am Steuergerät 22 übermittelt das Steuergerät 22 eine KEY_OFFER Nachricht 64 an den Sensor 2e, der den Empfang mit einer KEY_ACK Nachricht 68 bestätigt. Danach ist der Sensor 2e in das Netzwerk des Steuergerätes 22 eingebunden.

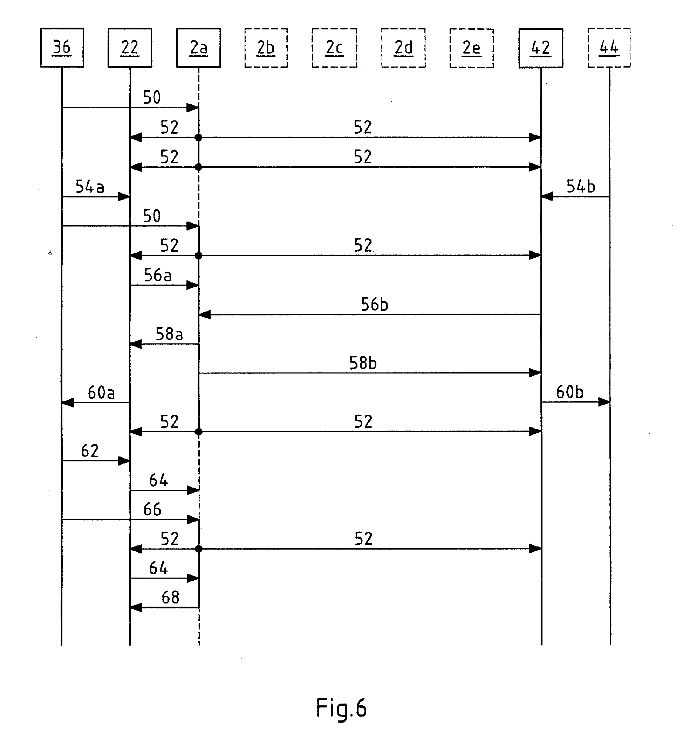

Fig. 6 zeigt den Ablauf eines Verfahrens, bei dem sowohl das Steuergerät 22 als auch das Steuergerät 42 im Einbindungs-Modus ist. Die Schritte 50, 52 entsprechen denen gemäß Fig. 4. Im Unterschied zu der Fig. 4 aktiviert 54a der Benutzer 34 den Einbindungs-Modus am Steuergerät 22 und der Benutzer 44 aktiviert 54b den Einbindungs-Modus am Steuergerät 42.

Wie zu erkennen ist, senden sowohl Steuergerät 22 als auch Steuergerät 42 nach dem Empfang der INCLUSION_DISCOVER Nachricht 52 jeweils eine INCLUSION_OFFER Nachricht 56a und 56b. Sensor 2a empfängt die INCLUSION_OFFER Nachricht 56a vom dem Steuergerät 22 und sendet an das Steuergerät 22 eine INCLUSION_REQ Nachricht 58a mit dem temporären Schlüssel. Sensor 2a empfängt auch die INCLUSION_OFFER Nachricht 56b vom dem Steuergerät 42 und sendet an das Steuergerät 42 eine INCLUSION_REQ Nachricht 58b ebenfalls mit dem temporären Schlüssel.

Sowohl Steuergerät 22 als auch Steuergerät 42 zeigen dem Benutzer den Sensor 2a an 60a, 60b. Solange kein KEY_OFFER in dem Sensor 2a empfangen wurde, sendet der Sensor 2a erneut INCLUSION_DISCOVER Nachrichten 52 aus.

In der Fig. 6 ist gezeigt, dass der Benutzer 34 Sensor 2a autorisiert 62. Die nachfolgenden Schritte entsprechen denen in Fig. 4. In der Fig. 6 wird der Sensor 2a nur in dem Steuergerät 22 autorisiert und nicht in dem Steuergerät 42, weshalb der Sensor 2a in das Netzwerk des Steuergeräts 22 eingebunden wird.

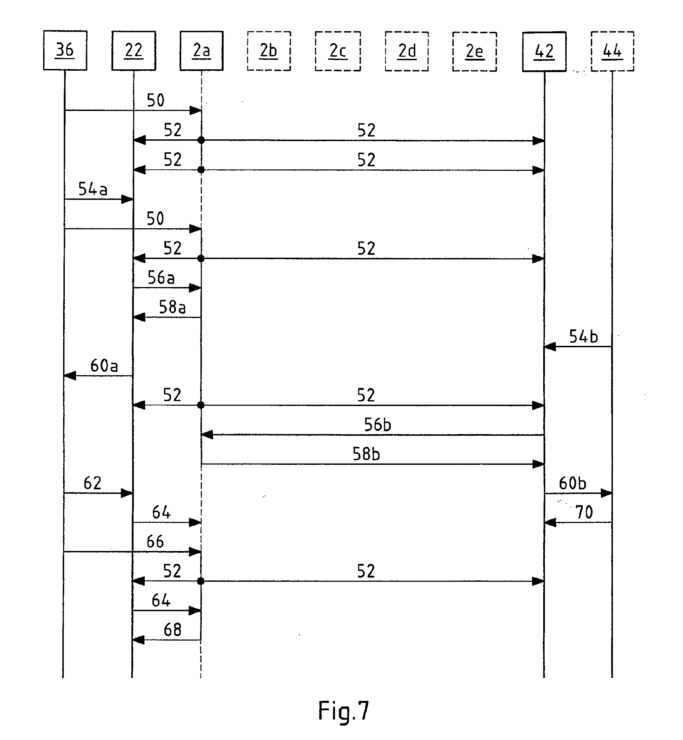

Fig. 7 zeigt den Ablauf eines Verfahrens entsprechend Fig. 6. Im Unterschied zu der Fig. 6 wird nach dem Anzeigen 60b des Sensors 2a in dem Steuergerät 42 der Sensor 2a aktiv nicht autorisiert 70. Somit sendet das Steuergerät 42 auch keine KEY_OFFER Nachricht an den Sensor 2a. Alle anderen Schritte entsprechen denen in Fig. 6, wobei der Einbindungs-Modus des Steuergeräts 22 aktiviert 54a ist, bevor eine Aktivierung 54b des Steuergeräts 42 stattgefunden hat, weshalb das Steuergerät 22 bereits eine INCLUSION_OFFER Nachricht 56 an den Sensor 2a aussendet, bevor eine INCLUSION_OFFER Nachricht 56b von dem Steuergerät 42 ausgesendet wurde.

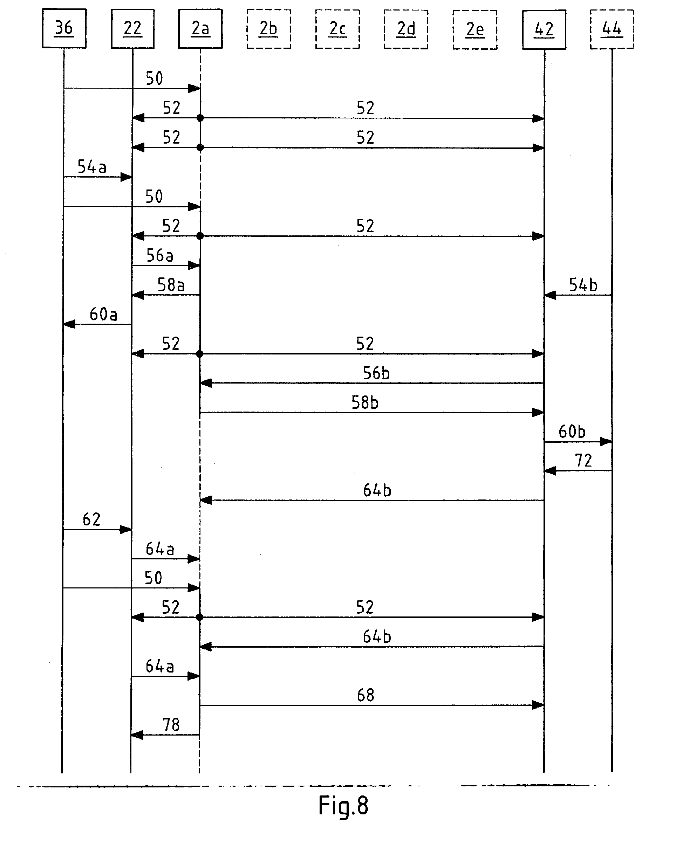

Fig. 8 zeigt den Ablauf eines Verfahrens, wie es in Fig. 7 dargestellt ist, jedoch wird in der Fig. 8 nach dem Anzeigen 60b des Gerätes in dem Steuergerät 42 dieses Gerät auch durch den Benutzer 44 autorisiert 72. Somit sendet das Steuergerät 42 an den Sensor 2a ebenfalls eine KEY_OFFER Nachricht 64b. Nach dem Autorisieren 62 des Sensors 2a an dem Steuergerät 22 sendet dieser auch eine KEY_OFFER Nachricht 64a. Beide KEY_OFFER Nachrichten 64a, 64b werden während eines Schlafmodus des Sensors 2a ausgesendet, so dass der Sensor 2a keine der beiden KEY_OFFER Nachrichten 64a, 64b empfangen kann.

Nach einer erneuten Aktivierung 50 des Sensors 2a sendet dieser erneut INCLUSION_DISCOVER Nachrichten 52 aus. Beide Steuergeräte 22, 42 empfangen diese INCLUSION_DISCOVER Nachricht 52. In beiden Steuergeräten wurde das Gerät autorisiert 62, 72. In dem gezeigten Beispiel übermittelt das Steuergerät 42 als erstes die KEY_OFFER Nachricht 64b. Der Sensor 2a empfängt zeitlich danach die KEY_OFFER Nachricht 64a des Steuergeräts 22. Da die KEY_OFFER Nachricht 64b zuerst empfangen wurde, sendet der Sensor 2a eine KEY_ACK Nachricht 68 an das Steuergerät 42 und eine KEY_NAK Nachricht 78 an das Steuergerät 22. In dem in Fig. 8 gezeigten Beispiel wird somit der Sensor 2a in dem Netzwerk des Steuergeräts 42 eingebunden und nicht in dem Netzwerk des Steuergeräts 22.

Der Benutzer des Steuergeräts 22 erfährt die fehlerhafte Einbindung durch die KEY_NAK Nachricht 78. Sollte die Einbindung in das Netzwerk des Steuergeräts 42 fehlerhaft sein und der Nutzer 34 im Besitz des Sensors 2a sein, kann er den Sensor 2a zurücksetzen und eine erneute Einbindung starten. Dadurch wird sichergestellt, dass kein fremdes Steuergerät 42 den Sensor 2a dauerhaft einbinden kann, wenn der Sensor 2a nicht im Besitz des Nutzers 44 des fremden Steuergeräts 42 ist.

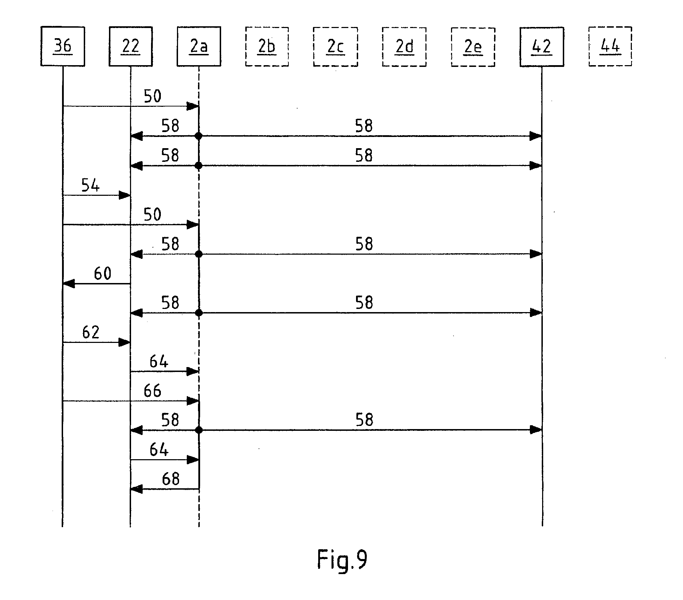

Fig. 9 zeigt den Ablauf eines vereinfachten Verfahrens, bei dem auf die INCLUSION_DISCOVER Nachrichten 52 und die INCLUSION_OFFER Nachrichten 56 verzichtet wird und der Sensor 2a unmittelbar nach dem aktivieren 50 des Einbindungs-Modus eine INCLUSION_REQ Nachricht 58 aussendet. Diese INCLUSION_REQ Nachricht 58 wird hierbei im Broadcast-Modus ausgesendet und ist nicht mehr an ein spezielles Steuergerät 22, 42 gerichtet.
Nachdem der Einbindungs-Modus im Steuergerät 42 aktiviert 54 wurde und der Sensor 2a ebenfalls aktiviert 50 ist, wird nach dem Empfangen einer INCLUSION_REQ Nachricht 58 in dem Steuergerät 22 der Sensor 2a dem Benutzer angezeigt 60. Das Einbinden des Sensors 2a in das Netzwerk des Steuergeräts 22 entspricht dem zuvor gezeigten mit den Schritten 62 bis 68, wobei anstelle einer INCLUSION_DISCOVER Nachricht 52 eine INCLUSION_REQ Nachricht 58 ausgesendet wird, solange in dem Sensor 2a kein Netzwerkschlüssel gespeichert ist. Nachdem eine Autorisierung durch den Benutzer vorgenommen wurde, wird eine KEY_OFFER Nachricht 64b von dem Steuergerät an den Sensor übermittelt. In der KEY_OFFER Nachricht ist der Netzwerkschlüssel verschlüsselt enthalten. Die Verschlüsselung des Netzwerkschlüssels kann wie folgt erfolgen.

Ein Temporärschlüssel kann in dem Steuergerät 42 erzeugt werden. Der Netzwerkschlüssel wird zunächst mit dem Temporärschlüssel verschlüsselt. Darüber hinaus wird anhand der Geräte-Identifikation ein Geräteschlüssel ermittelt. Dieser Geräteschlüssel kann in dem Steuergerät 42 vorhanden sein. Der mit dem Temporärschlüssel verschlüsselte Netzwerkschlüssel wird mit dem Geräteschlüssel verschlüsselt. In der KEY_OFFER Nachricht wird der so verschlüsselte Netzwerkschlüssel an den Sensor 2a übermittelt. Parallel dazu wird im Klartext der Temporärschlüssel übertragen. In dem Sensor 2a ist mit dem empfangenen Temporärschlüssel eine Entschlüsselung des mit dem Temporärschlüssel und dem

Geräteschlüssel verschlüsselte Netzwerkschlüssels möglich. Dann wird mit Hilfe des nur in dem Gerät bekannten Geräteschlüssels eine Entschlüsselung des nunmehr nur noch mit dem Geräteschlüssel verschlüsselten Netzwerkschlüssels vorgenommen.

Eine weitere Absicherung des Netzwerkschlüssels kann beispielsweise dadurch erfolgen, dass nach der Autorisierung ein Temporärschlüssel in dem Steuergerät 42 erzeugt wird. Der Netzwerkschlüssel wird zunächst mit dem Temporärschlüssel verschlüsselt. Der verschlüsselte Netzwerkschlüssel wird zusammen mit der Geräte-Identifikation an einen Schlüsselserver, der beispielsweise über das Internet erreichbar ist, übertragen. In dem Schlüsselserver wird anhand der Geräte-Identifikation ein Geräteschlüssel ermittelt und mit Hilfe des Geräteschlüssels wird der mit dem temporären Schlüssel verschlüsselte Netzwerkschlüssel verschlüsselt. Der mit Geräteschlüssel und Temporärschlüssel verschlüsselte Netzwerkschlüssel wird wiederum über das Internet an das Steuergerät 42 übertragen. Das Steuergerät 42 überträgt den doppelt verschlüsselten Netzwerkschlüssel an den Sensor 2a und im Klartext den Temporärschlüssel. Wird der Temporärschlüssel abgehört, ist es nicht möglich den Netzwerkschlüssel zu entschlüsseln, da dieser noch zusätzlich mit dem Geräteschlüssel verschlüsselt wurde. In dem Sensor 2a wird zunächst mit Hilfe des Geräteschlüssels der mit dem Geräteschlüssel und dem Temporärschlüssel verschlüsselte Netzwerkschlüssel entschlüsselt. Der dann nur noch mit dem Temporärschlüssel verschlüsselte Netzwerkschlüssel wird mit dem an das Gerät gesendeten Temporärschlüssel entschlüsselt und in dem Gerät liegt der Netzwerkschlüssel vor.

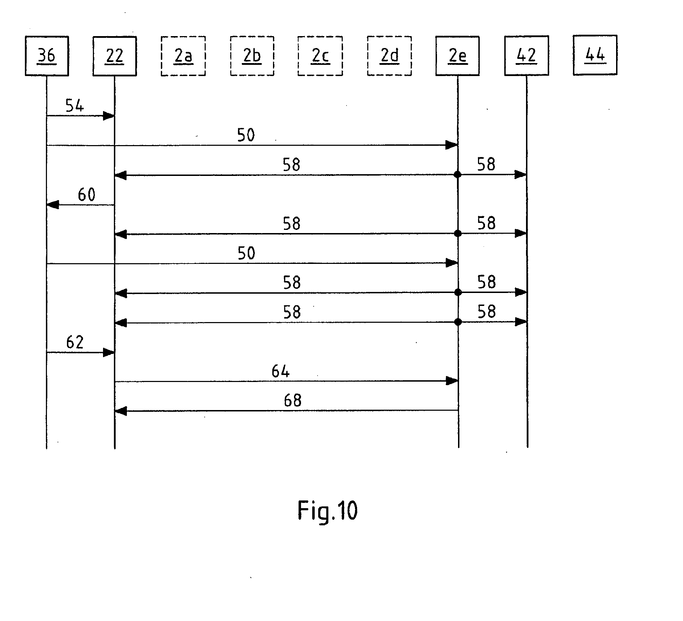

Fig. 10 zeigt ein Ausführungsbeispiel, bei dem der Sensor 2e als ständig empfangsbereites Gerät eingebunden wird. Das in Fig. 10 beschriebene Verfahren unterscheidet sich lediglich darin von dem in Fig. 9 beschriebenen Verfahren, dass die KEY_OFFER Nachricht 64 nach der Autorisierung 62 des Gerätes in dem Sensor 2e unmittelbar empfangen wird und eine Bestätigung erfolgt.

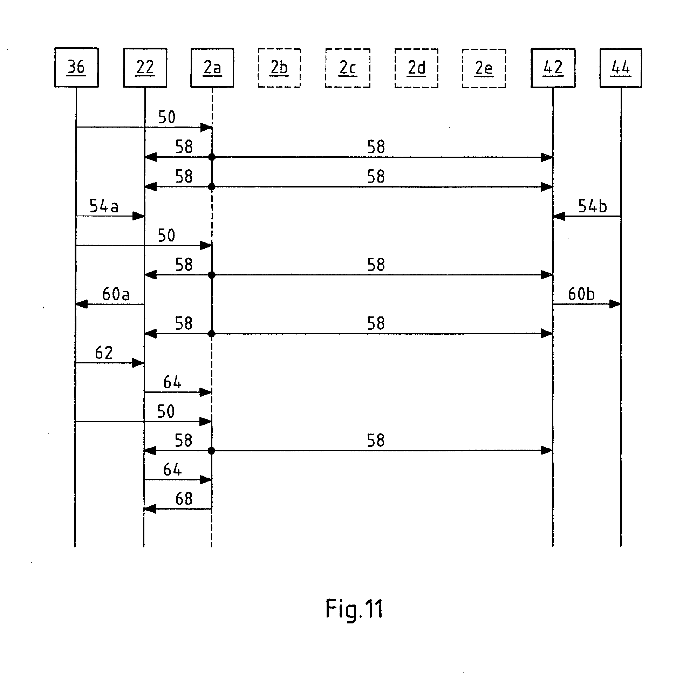

Das in Fig. 11 gezeigte Verfahren entspricht dem in Fig. 10 beschriebenen Verfahren, wobei bei dem in Fig. 11 beschriebenen Verfahren sowohl das Steuergerät 22 als auch das Steuergerät 42 aktiviert 54a, 54b sind und sich im Einbindungs-Modus befinden. Somit wird der Sensor 2e in beiden Steuergeräten angezeigt 60a, 60b. Jedoch erfolgt die Autorisierung 62 nur am Steuergerät 22, so dass der Sensor 2a nur durch das Steuergerät 22 eingebunden wird.

Die Anzeige 60b des neuen Geräts gegenüber dem Benutzer 44 kann entweder ignoriert werden oder auch durch aktives Handeln kann der Sensor 2a nicht autorisiert werden. In beiden Fällen wird der Sensor 2a durch das Steuergerät 22 eingebunden und nicht durch das Steuergerät 42.

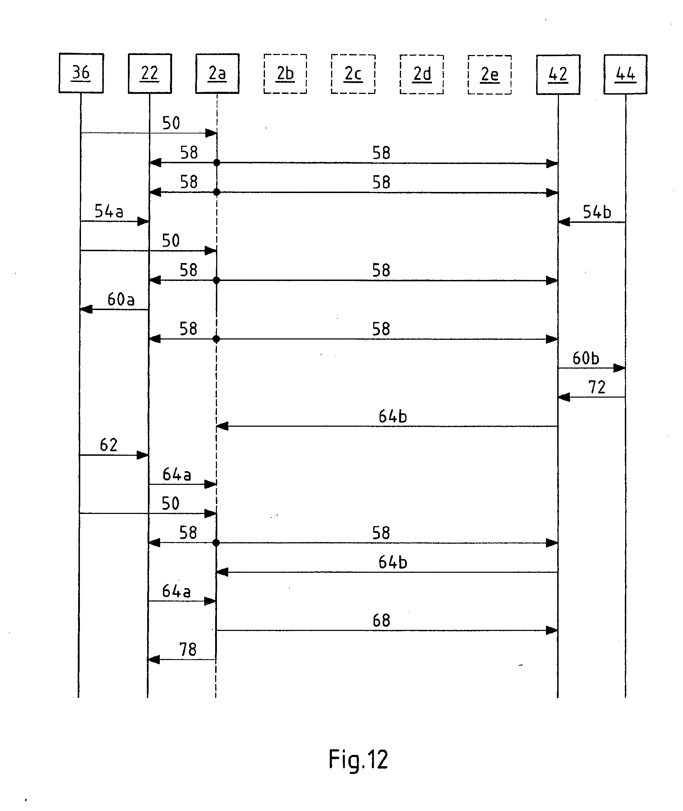

Fig. 12 zeigt im Wesentlichen ein bereits in Fig. 8 dargestelltes Verfahren, wobei hier anstelle der INCLUSION_DISCOVER Nachrichten 52 unmittelbar INCLUSION_REQ Nachrichten 58 ausgesendet werden. In Fig. 12 ist zu erkennen, dass auch hier das Steuergerät 42, dessen KEY_OFFER Nachricht 64 von dem Sensor 2a als erstes empfangen wurde, den Sensor 2a in sein Netzwerk einbindet.

## Patentansprüche

1. Verfahren zum Betreiben eines zentralen Steuergerätes für ein Heimautomatisierungssystem mit den Schritten
a) Empfangen einer Geräte-Einbindungs-Anfrage (INCLUSION_REQ 58) von einem neuen Gerät (2),
b) Ermitteln zumindest einer Geräte-Identifikation aus der Geräte-Einbindungs-Anfrage (INCLUSION_REQ 58),
c) Auswerten einer Geräte-Autorisierung (62, 72),
c1) Verschlüsseln eines im Steuergerät bekannten Netzwerkschlüssels mit einem temporären Schlüssel,
c2) Senden des mit dem temporären Schlüssel verschlüsselten Netzwerkschlüssels zusammen mit der Geräte-Identifikation an einen Schlüsseldienstserver,
c3) Empfangen von dem Schlüsseldienstserver des mit einem Geräteschlüssel verschlüsselten, mit dem temporären Schlüssel verschlüsselten Netzwerkschlüssels,
d) Aussenden des mit dem Geräteschlüssel verschlüsselten, mit dem temporären Schlüssel verschlüsselten Netzwerkschlüssels (KEY_OFFER 64) in Reaktion auf die Geräte-Autorisierung (62, 72).

2. Verfahren nach Anspruch 1, **dadurch gekennzeichnet, dass** das Aussenden des verschlüsselten Netzwerkschlüssels (KEY_OFFER 64) in Reaktion auf die Geräte-Autorisierung (62, 72) unmittelbar nach dem Empfang einer Geräte-Einbindungs-Anfrage nach Schritt a) erfolgt und/oder dass nach dem Aussenden des Netzwerkschlüssels (KEY_OFFER 64) der Empfang einer Schlüssel-Empfang-Bestätigungsnachricht (KEY_ACK 68) überwacht wird.

3. Verfahren nach Anspruch 2, **dadurch gekennzeichnet, dass** erst nach dem Empfang der Schlüssel-Empfang-Bestätigungsnachricht (KEY_ACK 68) das neue Gerät (2) von dem Steuergerät (22, 42) in das Heimautomatisierungssystem eingebunden wird.

4. Verfahren nach einem der Ansprüche 1 bis 3, **dadurch gekennzeichnet, dass** das Empfangen und/oder Auswerten einer Geräte-Einbindungs-Anfrage (INCLUSION_REQ 58) durch Aktivieren (54) eines Einbindungs-Modus ermöglicht wird.

5. Verfahren nach einem der Ansprüche 1 bis 4, **dadurch gekennzeichnet, dass** vor dem Schritt a) in einem Schritt a0) eine Einbindungs-Suche-Nachricht (INCLUSION_DISCOVER 52) des neuen Geräts empfangen wird, und/oder dass aus der Einbindungs-Suche-Nachricht (INCLUSION_DISCOVER 52) eine Geräte-Identifikation des neuen Gerätes (2) ermittelt wird und/oder dass nach dem Schritt a0) und vor dem Schritt a) in einem Schritt a1) eine Einbindungs-Angebots-Nachricht (INCLUSION_OFFER 56) an das neue Gerät (2)ausgesendet wird, und/oder dass die in Schritt a1) ausgesendete Einbindungs-Angebots-Nachricht (INCLUSION_OFFER 56) eine Steuergerät-Identifikation enthält und dass die in dem Schritt a) empfangene Geräte-Einbindungs-Anfrage (INCLUSION_REQ 58) die Steuergerät-Identifikation enthält.

6. Verfahren nach einem der Ansprüche 1 bis 5, **dadurch gekennzeichnet, dass** der in Schritt b) empfangene Schlüssel aus zumindest zwei Schlüsseln gebildet ist, wobei ein erster Schlüssel ein temporär in dem Gerät (2) erzeugter Schlüssel ist, der mit einem permanent in dem Gerät (2) gespeicherten Schlüssel verschlüsselt ist.

7. Verfahren nach einem der Ansprüche 1 bis 6, **dadurch gekennzeichnet, dass** die Geräte Autorisierung (62, 72) durch eine Benutzerinteraktion erfolgt oder dadurch, dass eine zentral gespeicherte Zuordnung zwischen Geräte-Identifikation und Steuergerät (22, 42) abgefragt wird und bei einem positiven Abfrageergebnis eine Autorisierung automatisch erfolgt.

8. Verfahren nach einem der Ansprüche 5 bis 7, **dadurch gekennzeichnet, dass** ein Einbindungs-Modus des Steuergeräts (22, 42) durch eine Nutzerinteraktion aktiviert wird und dass nur in dem Einbindungs-Modus Nachrichten nach Schritt a0) und/oder a) auswertbar und/oder empfangbar sind und/oder dass der Einbindungs-Modus nach einer definierten Zeit nach der Nutzerinteraktion deaktiviert wird.

9. Verfahren nach einem der Ansprüche 1 bis 8, **dadurch gekennzeichnet, dass** der Netzwerkschlüssel mit dem temporären Schlüssel verschlüsselt wird und anschließend der verschlüsselte Netzwerkschlüssel zusammen mit dem temporären Schlüssel im Klartext an das Gerät (2) übertragen wird.

10. Verfahren zum Einbinden eines Gerätes in ein Heimautomatisierungssystem mit den Schritten:
a) Detektieren eines einen Einbindungs-Modus aktivierenden Ereignisses (50),
b) Aussenden einer Geräte-Einbindungs-Anfrage (INCLUSION_REQ 58) in Reaktion auf das Ereignis, wobei in der Geräte-Einbindungs-Anfrage (INCLUSION_REQ 58) zumindest eine Geräte-Identifikation enthalten ist,
c) Empfangen eines mit einem Geräteschlüssel verschlüsselten, mit dem temporären Schlüssel verschlüsselten Netzwerkschlüssels (KEY_OFFER 68),
c1) Entschlüsseln des mit dem Geräteschlüssel verschlüsselten, mit dem temporären Schlüssel verschlüsselten Netzwerkschlüssels mit dem im Gerät bekannten Geräteschlüssel,
c2) anschließendes Entschlüsseln des dem temporären Schlüssel verschlüsselten Netzwerkschlüssels mit dem im Gerät bekannten temporären Schlüssel zum Erhalten des entschlüsselten Netzwerkschlüssels.

11. Verfahren nach Anspruch 10, **dadurch gekennzeichnet, dass** das den Einbindungs-Modus aktivierende Ereignis (50) eine Benutzerinteraktion, ein Einschalten des Gerätes und/oder ein Zurücksetzen des Gerätes in den Auslieferungszustand ist, wobei der Einbindungs-Modus ausschließlich für den Fall aktiviert wird, dass noch kein Netzwerkschlüssel (KEY_OFFER 64) in dem Gerät (2) empfangen wurde.

12. Verfahren nach Anspruch 10 oder 11, **dadurch gekennzeichnet, dass** der empfangene Netzwerkschlüssel (KEY_OFFER 64) zusammen mit einer Steuergeräte-Identifikation empfangen wird, und/oder dass der empfangene Netzwerkschlüssel (KEY_OFFER 64) durch Verwendung der Steuergeräte-Identifikation gegenüber dem Steuergerät (22, 42) mit einer Schlüssel-Empfang-Bestätigungsnachricht (KEY_ACK 68) bestätigt wird.

13. Verfahren nach einem der Ansprüche 10 bis 1, **dadurch gekennzeichnet, dass** für den Fall, dass bereits ein Netzwerkschlüssel empfangen wurde, eine Schlüssel-Empfang-Abweisungsnachricht (KEY_NAK 78) ausgesendet wird.

14. Zentrales Steuergerät (22, 42) für ein Heimautomatisierungssystem mit
- einer Kommunikationsschnittstelle zum Empfangen einer Geräte-Einbindungs-Anfrage (INCLUSION_REQ 58),
- einem Prozessor zum Ermitteln zumindest einer Geräte-Identifikation aus der Geräte-Einbindungs-Anfrage (INCLUSION_REQ 58),
- wobei der Prozessor zum Auswerten einer Geräte-Autorisierung und zum Verschlüsseln eines im Steuergerät bekannten Netzwerkschlüssels mit einem temporären Schlüssel eingerichtet ist und die Kommunikationsschnittstelle zum Senden des mit dem temporären Schlüssel verschlüsselten Netzwerkschlüssels zusammen mit der Geräte-Identifikation an einen Schlüsseldienstserver, und zum Empfangen von dem Schlüsseldienstserver des mit einem Geräteschlüssel verschlüsselten, mit dem temporären Schlüssel verschlüsselten Netzwerkschlüssels, sowie zum Aussenden des mit dem Geräteschlüssel verschlüsselten, mit dem temporären Schlüssel verschlüsselten Netzwerkschlüssels (KEY_OFFER 64) in Reaktion auf die Geräte-Autorisierung ansteuert.

15. Gerät (2) für ein Heimautomatisierungssystem mit:
- einem Prozessor zum Detektieren eines einen Einbindungs-Modus aktivierenden Ereignisses,
- einer Kommunikationsschnittstellte zum Aussenden einer Geräte-Einbindungs-Anfrage (INCLUSION_REQ 58) in Reaktion auf das Ereignis, wobei in der Geräte-Einbindungs-Anfrage (INCLUSION_REQ 58) zumindest eine Geräte-Identifikation enthalten ist, und zum Empfangen eines mit einem Geräteschlüssel verschlüsselten, mit dem temporären Schlüssel verschlüsselten Netzwerkschlüssels (KEY_ACK 68), wobei der Prozessor ferner eingerichtet ist zum Entschlüsseln des mit dem Geräteschlüssel verschlüsselten, mit dem temporären Schlüssel verschlüsselten Netzwerkschlüssels mit dem im Gerät bekannten Netzwerkschlüssel, und zum anschließenden Entschlüsseln des dem temporären Schlüssel verschlüsselten Netzwerkschlüssels mit dem im Gerät bekannten temporären Schlüssel zum Erhalten des entschlüsselten Netzwerkschlüssels.

## Claims

1. Method for operating a central control device for a home automation system having the steps
a) Receiving a device inclusion request (INCLUSION_REQ 58) from a new device (2),
b) Determining at least one device identification from the device inclusion request (INCLUSION_REQ 58),
c) Assessing a device authorisation (62, 72),
c1) Encrypting a network key known in the control device with a temporary key,
c2) Sending the network key encrypted with the temporary key together with the device identification to a key service server,
c3) Receiving from the key service server the network key encrypted with the temporary key encrypted with a device key,
d) Sending the network key (KEY_OFFER 64) encrypted with the temporary key encrypted with a device key in response to the device authorisation (62, 72).

2. Method according to Claim 1, **characterised in that** the sending of the encrypted network key (KEY_OFFER 64) in response to the device authorisation (62, 72) takes place directly after the receipt of a device inclusion request according to step a) and/or **in that** after the sending of the network key (KEY_OFFER 64) the receipt of a key receipt confirmation message (KEY_ACK 68) is monitored.

3. Method according to Claim 2, **characterised in that** only after the receipt of the key receipt confirmation message (KEY_ACK 68) is the new device (2) included in the home automation system by the control device (22, 42).

4. Method according to any one of Claims 1 to 3, **characterised in that** the receiving and/or assessing of a device inclusion request (INCLUSION_REQ 58) is enabled by activating (54) an inclusion mode.

5. Method according to any one of Claims 1 to 4, **characterised in that** prior to step a) in a step a0), an inclusion search message (INCLUSION_DISCOVER 52) from the new device is received, and/or **in that** a device identification of the new device (2) is determined from the inclusion search message (INCLUSION_DISCOVER 52) and/or **in that** after step a0) and prior to step a) in a step a1) an inclusion offer message (INCLUSION_OFFER 56) is sent to the new device (2) and/or **in that** the inclusion offer message (INCLUSION_OFFER 56) sent in step a1) contains a control device identification and **in that** the device inclusion request (INCLUSION_REQ 58) received in step a) contains the control device identification.

6. Method according to any one of Claims 1 to 5, **characterised in that** the key received in step b) is formed of at least two keys, wherein a first key is a key temporarily generated in the device (2), which is encrypted with a key permanently stored in the device (2).

7. Method according to any one of Claims 1 to 6, **characterised in that** the device authorisation (62, 72) takes place by a user interaction or **in that** a centrally stored allocation between device identification and control device (22, 42) is queried and in the case of a positive query result, an authorisation automatically takes place.

8. Method according to any one of Claims 5 to 7, **characterised in that** an inclusion mode of the control device (22, 42) is activated by a user interaction and **in that** only in the inclusion mode are messages according to step a0) and/or a) assessable and/or receivable and/or **in that** the inclusion mode is deactivated after a defined time after the user interaction.

9. Method according to any one of Claims 1 to 8, **characterised in that** the network key is encrypted with the temporary key and the encrypted network key is subsequently transmitted, together with the temporary key, in plain text to the device (2).

10. Method for including a device in a home automation system with the steps:
a) Detecting an event (50) activating an inclusion mode,
b) Sending a device inclusion request (INCLUSION_REQ 58) in response to the event, wherein at least one device identification is contained in the device inclusion request (INCLUSION_REQ 58),
c) Receiving a network key (KEY_OFFER 68) encrypted with the temporary key encrypted with a device key,
c1) Decrypting the network key encrypted with the temporary key encrypted with the device key using the device key known in the device,
c2) Subsequently decrypting the network key encrypted with the temporary key using the temporary key known in the device in order to obtain the encrypted network key.

11. Method according to Claim 10, **characterised in that** the event (50) activating the inclusion mode is a user interaction, a switching-on of the device and/or a resetting of the device into the delivery state, wherein the inclusion mode is activated exclusively for the case that no network key (KEY_OFFER 64) had yet been received in the device (2).

12. Method according to Claim 10 or 11, **characterised in that** the received network key (KEY_OFFER 64) is received together with a control device identification and/or **in that** the received network key (KEY_OFFER 64) is confirmed by using the control device identification with respect to the control device (22, 42) with a key receipt confirmation message (KEY_ACK 68).

13. Method according to any one of Claims 10 to 1, **characterised in that** for the case that a network key had already been sent, a key receipt rejection message (KEY_NAK 78) is sent.

14. Central control device (22, 42) for a home automation system having
- a communications interface for receiving a device inclusion request (INCLUSION_REQ 58),
- a processor for determining at least one device identification from the device inclusion request (INCLUSION_REQ 58),
- wherein the processor for assessing a device authorisation and for encrypting a network known in the control device is configured with a temporary key and controls the communications interface for sending the network key encrypted with the temporary key together with the device identification to a key service server and for receiving from the key service server the network key encrypted with the temporary key encrypted with a device key as well as for sending the network key (KEY_OFFER 64) encrypted with the temporary key encrypted with the device key in response to the device authorisation.

15. Device (2) for a home automation system having:
- a processor for detecting an event activating an inclusion mode,
- a communications interface for sending a device inclusion request (INCLUSION_REQ 58) in response to the event, wherein at least one device identification is contained in the device inclusion request (INCLUSION_REQ 58) and for receiving a network key (KEY_ACK 68) encrypted with the temporary key encrypted with a device key, wherein the processor is also configured to decrypt the network key encrypted with the temporary key encrypted with the device key using the network key known in the device and for subsequently decrypting the network key encrypted with the temporary key using the temporary key known in the device for obtaining the decrypted network key.

## Revendications

1. Procédé de fonctionnement d'un appareil de commande central pour un système d'automatisation de domotique comprenant les étapes consistant :
a) à recevoir une demande d'intégration d'appareil (INCLUSION_REQ 58) provenant d'un nouvel appareil (2),
b) à déterminer au moins une identification d'appareil à partir de la demande d'intégration d'appareil (INCLUSION_REQ 58),
c) à analyser une autorisation d'appareil (62, 72),
c1) à coder, avec un code temporaire, un code de réseau connu de l'appareil de commande,
c2) à envoyer à un serveur de services de codes, le code de réseau codé avec le code temporaire, ainsi que l'identification de l'appareil,
c3) à recevoir du serveur de services de codes, le code de réseau codé avec un code de l'appareil et codé avec le code temporaire,
d) à envoyer le code de réseau (KEY_OFFER 64) codé avec le code de l'appareil et codé avec le code temporaire, en réaction à l'autorisation d'appareil (62, 72).

2. Procédé selon la revendication 1, **caractérisé en ce que** l'envoi du code de réseau codé (KEY_OFFER 64), en réaction à l'autorisation d'appareil (62, 72), se produit après l'étape a), immédiatement après la réception d'une demande d'intégration d'appareil et/ou **en ce que**, après l'envoi du code de réseau (KEY_OFFER 64), la réception d'un message d'accusé de réception de code (KEY_ACK 68) est surveillée.

3. Procédé selon la revendication 2, **caractérisé en ce que** le nouvel appareil (2) est intégré dans le système d'automatisation de domotique, par l'appareil de commande (22, 42), seulement après la réception du message d'accusé de réception de code (KEY_ACK 68).

4. Procédé selon l'une quelconque des revendications 1 à 3, **caractérisé en ce que** la réception et/ou l'analyse d'une demande d'intégration d'appareil (INCLUSION_REQ 58) est rendue possible par l'activation (54) d'un mode d'intégration.

5. Procédé selon l'une quelconque des revendications 1 à 4, **caractérisé en ce qu'**un message de recherche d'intégration (INCLUSION_DISCOVER 52) du nouvel appareil est reçu au cours d'une étape a0) se produisant avant l'étape a), et/ou **en ce que**, d'après le message de recherche d'intégration (INCLUSION_DISCOVER 52) est déterminée une identification d'appareil du nouvel appareil (2) et/ou **en ce qu'**un message d'offre d'intégration (INCLUSION_OFFER 56) est envoyé au nouvel appareil (2) au cours d'une étape a1) se produisant après l'étape a0) et avant l'étape a), et/ou **en ce que** le message d'offre d'intégration (INCLUSION_OFFER 56) envoyé au cours de l'étape a1) contient une identification de l'appareil de commande, et **en ce que** la demande d'intégration d'appareil (INCLUSION_REQ 58) reçue au cours de l'étape a) contient l'identification de l'appareil de commande.

6. Procédé selon l'une quelconque des revendications 1 à 5, **caractérisé en ce que** le code reçu au cours de l'étape b) est formé par au moins deux codes, où un premier code est un code produit temporairement dans l'appareil (2), lequel code peut être codé avec un code stocké de façon permanente dans la mémoire de l'appareil (2).

7. Procédé selon l'une quelconque des revendications 1 à 6, **caractérisé en ce que** l'autorisation d'appareil (62, 72) se produit par une interaction de l'utilisateur, ou bien **en ce qu'**une affectation mémorisée de façon centrale, entre l'identification de l'appareil et l'appareil de commande (22, 42), est demandée, et dans le cas d'un résultat de demande positif, une autorisation est fournie automatiquement.

8. Procédé selon l'une quelconque des revendications 5 à 7, **caractérisé en ce qu'**un mode d'intégration de l'appareil de commande (22, 42) est activé par une interaction de l'utilisateur, et **en ce que** des messages seulement dans le mode d'intégration peuvent être analysés et/ou reçus après l'étape a0) et/ou l'étape a), et/ou **en ce que** le mode d'intégration est désactivé après un laps de temps défini se produisant après l'interaction de l'utilisateur.

9. Procédé selon l'une quelconque des revendications 1 à 8, **caractérisé en ce que** le code de réseau est codé avec le code temporaire et, ensuite, le code de réseau codé est transmis à l'appareil (2), en clair, en même temps que le code temporaire.

10. Procédé d'intégration d'un appareil dans un système d'automatisation de domotique comprenant les étapes consistant :
a) à détecter un évènement (50) activant un mode d'intégration,
b) à envoyer une demande d'intégration d'appareil (INCLUSION_REQ 58) en réaction à l'évènement, où au moins une identification d'appareil est contenue dans la demande d'intégration d'appareil (INCLUSION_REQ 58),
c) à recevoir un code de réseau (KEY_OFFER 68) codé avec un code d'appareil et codé avec le code temporaire,
c1) à décoder, avec le code d'appareil connu de l'appareil, le code de réseau codé avec le code de l'appareil et codé avec le code temporaire,
c2) à décoder ensuite, avec le code temporaire connu de l'appareil, le code de réseau codé avec le code temporaire, pour obtenir le code de réseau décodé.

11. Procédé selon la revendication 10, **caractérisé en ce que** l'évènement (50) activant le mode d'intégration est une interaction de l'utilisateur, une mise en service de l'appareil et/ou un retour de l'appareil dans l'état de livraison, où le mode d'intégration est activé exclusivement, pour le cas où aucun code de réseau (KEY_OFFER 64) n'a encore été reçu dans l'appareil (2).

12. Procédé selon la revendication 10 ou 11, **caractérisé en ce que** le code de réseau reçu (KEY_OFFER 64) est reçu en même temps qu'une identification de l'appareil de commande, et/ou **en ce que** le code de réseau reçu (KEY_OFFER 64) est confirmé avec un message d'accusé de réception de code (KEY_ACK 68), par l'utilisation de l'identification d'appareil de commande par rapport à l'appareil de commande (22, 42).

13. Procédé selon l'une quelconque des revendications 1 à 10, **caractérisé en ce que**, au cas où un code de réseau a déjà été reçu, un message de non acceptation de réception de code (KEY_NAK 78) est envoyé.

14. Appareil de commande central (22, 42) pour un système d'automatisation de domotique comprenant :
- une interface de communication pour la réception d'une demande d'intégration d'appareil (INCLUSION_REQ 58),
- un processeur servant à déterminer au moins une identification d'appareil d'après la demande d'intégration d'appareil (INCLUSION_REQ 58),
- où le processeur est agencé pour l'analyse d'une autorisation d'appareil et pour le codage, avec un code temporaire, d'un code de réseau connu de l'appareil de commande, et ledit processeur pilote l'interface de communication pour l'envoi à un serveur de services de codes, du code de réseau codé avec le code temporaire, ledit code étant envoyé en même temps que l'identification d'appareil, et pour la réception, par le serveur de services de codes, du code de réseau codé avec un code de l'appareil et codé avec le code temporaire, ainsi que pour l'envoi du code de réseau (KEY_OFFER 64) codé avec le code de l'appareil et codé avec le code temporaire, en réaction à l'autorisation d'appareil.

15. Appareil (2) pour un système d'automatisation de domotique comprenant :
- un processeur servant à détecter un évènement activant un mode d'intégration,
- une interface de communication pour l'envoi d'une demande d'intégration d'appareil (INCLUSION_REQ 58), en réaction à l'évènement, où au moins une identification d'appareil est contenue dans la demande d'intégration d'appareil (INCLUSION_REQ 58), et pour la réception d'un code de réseau (KEY_ACK 68) codé avec un code de l'appareil et codé avec le code temporaire, où le processeur est agencé en outre pour le décodage, avec le code de réseau connu de l'appareil, du code de réseau codé avec le code de l'appareil et codé avec le code temporaire, et pour le décodage, qui se produit ensuite, avec le code temporaire connu de l'appareil, du code de réseau codé avec le code temporaire, afin d'obtenir le code de réseau décodé.
